(19) Europäisches Patentamt
European Patent Office
Office européen des brevets

(11) EP 4 484 458 A1

(12) **EUROPEAN PATENT APPLICATION**
published in accordance with Art. 153(4) EPC

(43) Date of publication:
**01.01.2025 Bulletin 2025/01**

(21) Application number: **23886095.1**

(22) Date of filing: **20.10.2023**

(51) International Patent Classification (IPC):
***C08F 210/16*** *(2006.01)* ***C08F 210/14*** *(2006.01)*
***C08J 5/18*** *(2006.01)*

(52) Cooperative Patent Classification (CPC):
**C08F 210/14; C08F 210/16; C08J 5/18**

(86) International application number:
**PCT/KR2023/016343**

(87) International publication number:
**WO 2024/096399 (10.05.2024 Gazette 2024/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **02.11.2022 KR 20220144766**
**16.10.2023 KR 20230137793**

(71) Applicant: **LG Chem, Ltd.**
**Yeongdeungpo-gu**
**Seoul 07336 (KR)**

(72) Inventors:
- **HONG, Seok Bin**
**Daejeon 34122 (KR)**
- **KIM, Hyun Tae**
**Daejeon 34122 (KR)**
- **CHOI, Sungho**
**Daejeon 34122 (KR)**
- **JEON, Sangjin**
**Daejeon 34122 (KR)**
- **LEE, Jinyoung**
**Daejeon 34122 (KR)**
- **GWON, Donghyeon**
**Daejeon 34122 (KR)**
- **LEE, Chaeeun**
**Daejeon 34122 (KR)**

(74) Representative: **Hoffmann Eitle**
**Patent- und Rechtsanwälte PartmbB**
**Arabellastraße 30**
**81925 München (DE)**

(54) **POLYOLEFIN AND FILM COMPRISING SAME**

(57) Provided are a polyolefin exhibiting excellent haze property along with high drop impact strength property, and a film including the same.

【FIG. 1】

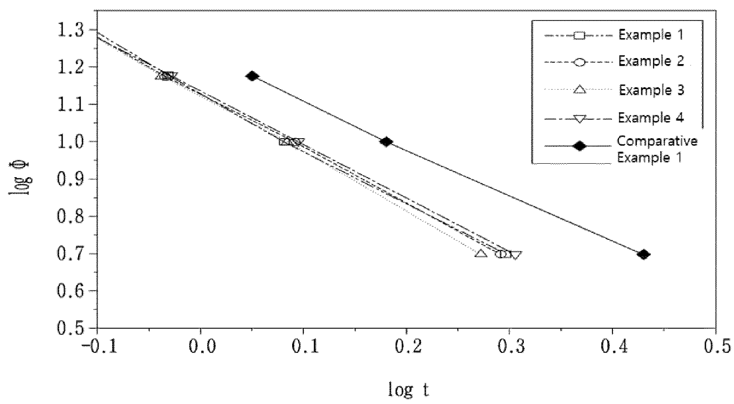


EP 4 484 458 A1

## Description

[TECHNICAL FIELD]

Cross-reference to Related Application

The present application is based on, and claims priority from, Korean Patent Application Nos. 10-2022-0144766 and 10-2023-0137793, filed on November 2, 2022 and October 16, 2023, respectively, the disclosures of which are hereby incorporated by reference herein in their entirety.

The present invention relates to a polyolefin exhibiting an excellent haze property along with a high drop impact strength property, and a film including the same.

[BACKGROUND ART]

Linear low-density polyethylene (LLDPE), which is prepared by copolymerization of ethylene and alpha olefin at a low pressure using a polymerization catalyst, is a resin that has a narrow molecular weight distribution and short chain branches of a certain length and does not have long chain branches. A linear low-density polyethylene film has high breaking strength and elongation, and excellent tear strength and drop impact strength, as well as general properties of polyethylene, and therefore, the use is increasing in stretch films, overlap films, and the like, to which application of the existing low-density polyethylene (LDPE) or high-density polyethylene (HDPE) is difficult.

With recent decarbonization, there is an increasing demand for high-performance linear low-density polyethylene to improve recyclability, and in addition, there is also an increasing demand for linear low-density polyethylene with excellent processability and drop impact strength.

Dart drop impact strength is a very important mechanical property that determines the resistance of a resin to various impacts. However, linear low-density polyethylene has disadvantages of poor blown film processability and low transparency as compared with excellent mechanical properties. The blown film is a film prepared by blowing air into molten plastic to inflate, and is also named an inflation film.

Generally, as the linear low-density polyethylene has a lower density, it has the characteristics of better transparency and higher dart drop impact strength. However, when a lot of alpha olefin comonomers are used to prepare low-density polyethylene, there is a problem that fouling may be frequently generated during a slurry polymerization process, and therefore, in the slurry polymerization process, products with a density of 0.915 g/cc or more are mainly produced.

Accordingly, there is a demand for the development of a polyolefin that is able to realize excellent transparency along with a high impact strength property.

[DETAILED DESCRIPTION OF THE INVENTION]

[TECHNICAL PROBLEM]

In order to solve the problems of the prior art, there is provided a polyolefin exhibiting excellent transparency along with a high impact strength property through control of the crystal structure.

There is also provided a film, specifically, a blown film including the polyolefin.

[TECHNICAL SOLUTION]

According to the present invention, there is provided a polyolefin,

wherein a molecular weight distribution is 2.5 to 4,
difficulty of crystallization (F(T)) and a ratio (a) of Avrami parameter to Ozawa parameter, calculated according to the Mo method after differential scanning calorimetry (DSC), satisfy the following requirements of (i) and (ii) under the condition of 20% relative crystallinity, and
a peak height ratio of $A_H/A_1$ satisfies the following requirement of (iii) in a temperature rising elution fractionation (TREF) curve by cross fraction chromatography (CFC) analysis:

(i)

$$F(T) \leq 15$$

(ii)

$$a > 1.45$$

(iii)

$$A_H/A_1 \geq 1.8$$

in (iii),

$A_H$ represents a peak height of a highest peak in the TREF curve, and
$A_1$ represents a peak height of a lowest peak when the lowest peak in the TREF curve exists at an elution temperature of 40°C to 75°C, and represents a height at an elution temperature of 65°C when the lowest peak in the TREF curve does not exist at an elution temperature of 40°C to 75°C, or when the lowest peak does not exist because the TREF curve has a single peak.

There is also provided a film including the polyolefin.

[ADVANTAGEOUS EFFECTS]

A polyolefin according to the present invention exhibits excellent transparency along with a high impact strength property. Accordingly, it is useful in the production of films, specifically, blown films which require the high impact strength property and excellent transparency.

[BRIEF DESCRIPTION OF THE DRAWINGS]

FIG. 1 is a graph showing a relationship between a crystallization completion time and a cooling rate under the condition of 20% relative crystallinity in a DSC analysis of polyolefins of Examples 1 to 4 and Comparative Example 1;
FIG. 2 is a diagram showing definitions of $A_1$ and $A_H$ in a TREF curve of the polyolefin of Example 1;
FIG. 3 is a curve showing TREF obtained through a CFC analysis of the polyolefin of Example 1 and a molecular weight in each elution region;
FIG. 4 is a curve showing TREF obtained through a CFC analysis of the polyolefin of Example 2 and a molecular weight in each elution region;
FIG. 5 is a curve showing TREF obtained through a CFC analysis of the polyolefin of Example 3 and a molecular weight in each elution region; and
FIG. 6 is a curve showing TREF obtained through a CFC analysis of the polyolefin of Example 4 and a molecular weight in each elution region.

[DETAILED DESCRIPTION OF THE EMBODIMENTS]

As used herein, the terms "the first", "the second", and the like are used to describe a variety of components, and these terms are merely employed to differentiate a certain component from other components.
Further, the terms used in this description are just for explaining exemplary embodiments and it is not intended to restrict the present invention. The singular expression may include the plural expression unless it is differently expressed contextually. It must be understood that the term "include", "equip", or "have" in the present description is only used for designating the existence of characteristics taken effect, numbers, steps, components, or combinations thereof, and do not exclude the existence or the possibility of addition of one or more different characteristics, numbers, steps, components or combinations thereof beforehand.
In the present invention, room temperature means 20±5°C.
The present invention may be variously modified and have various forms, and specific embodiments will be illustrated and described in detail as follows. It should be understood, however, that the description is not intended to limit the present invention to the particular forms disclosed, but on the contrary, the intention is to cover all modifications, equivalents, and alternatives falling within the spirit and scope of the invention.
Hereinafter, a polyolefin of the present invention and a film including the same will be described in detail.
With regard to the polyolefin according to the present invention,

a molecular weight distribution is 2.5 to 4,
difficulty of crystallization (F(T)) and a ratio (a) of Avrami parameter to Ozawa parameter, calculated according to the Mo method after differential scanning calorimetry (DSC), satisfy the following requirements of (i) and (ii) under the condition of 20% relative crystallinity, and
a peak height ratio of $A_H/A_1$ satisfies the following requirement of (iii) in a temperature rising elution fractionation (TREF) curve (X axis: elution temperature (°C), Y axis: elution amount (dw/dt)) by cross fraction chromatography (CFC) analysis:

(i)

$$F(T) \leq 15$$

(ii)

$$a > 1.45$$

(iii)

$$A_H/A_1 \geq 1.8$$

in (iii),

$A_H$ represents a peak height of a highest peak in the TREF curve, and
$A_1$ represents a peak height of a lowest peak when the lowest peak in the TREF curve exists at an elution temperature of 40°C to 75°C, and represents a height at an elution temperature of 65°C when the lowest peak in the TREF curve does not exist at an elution temperature of 40°C to 75°C, i.e., when the lowest peak exists in the temperature range outside the elution temperature of 40°C to 75°C, or when the lowest peak does not exist because the TREF curve has a single peak.

Blown film extrusion, which is used in the production of packaging materials and various industrial films, is a method of mass-producing a film with a uniform thickness and surface by generating air flow to expand the film which is extruded from a die through a screw. The method is mainly used to produce films with a relatively low melt index (MI) of approximately 0.5 to 2.0. In the process of expanding the polymer melt with air, uniform orientation may be provided in the mechanical direction (MD) and the direction perpendicular to stretching (transverse direction, TD), thereby securing excellent mechanical properties.
However, due to the method of generating the bubble shape and controlling the degree of cooling through air, transparency is not as good as that of cast film extrusion. Therefore, a method of improving the film surface by blending LDPE with LLDPE is mainly used. However, in this case, there is a problem that the mechanical properties of the film are greatly reduced.
Accordingly, it is necessary to develop a polyolefin having excellent basic mechanical properties while having excellent haze property even without blending with LDPE, and to quantify the corresponding structure.
Meanwhile, in the case of LLDPE for film production, optical properties and physical properties change through the process of being extruded from the die and being cooled. In this process, depending on the polymer structure of LLDPE, it may exhibit different crystallization behaviors even under the same processing conditions.
Accordingly, in the present invention, a polyolefin is defined by crystallization behavior parameters analyzed according to the Mo method, specifically, difficulty of crystallization (F(T)) and a ratio (a) of Avrami parameter to Ozawa parameter, and at the same time, its dart drop impact strength and transparency are optimized to excellent ranges.
The Mo Method is a method of analyzing the crystallization characteristics of polymers by combining the Avrami Equation and the Ozawa method, and may be expressed as in Equation 1 below (see a literature: Li, Yu, et al. Journal of Applied Polymer Science 138.2 (2021): 49652).

[Equation 1]

$$\log \Phi = \log F(T) - a \log t$$

in Equation 1,

Φ represents a cooling rate, F(T) represents difficulty of crystallization, a represents a ratio of Avrami parameter to Ozawa parameter (Avrami parameter/Ozawa parameter), and t represents a crystallization completion time, i.e., a time taken to reach 20% relative crystallinity.

The above equation may be graphed by plotting the crystallization completion time (log t) related to the crystallization rate on the X-axis, and the external condition, cooling rate (log Φ), on the Y-axis.

FIG. 1 is a graph showing the relationship between the crystallization completion time and the cooling rate under the condition of 20% relative crystallinity in differential scanning calorimeter (DSC) analysis of polyolefins of Examples 1 to 4 and Comparative Example 1 of the present specification. FIG. 1 is only an example for explaining the present invention, and the present invention is not limited thereto.

As shown in FIG. 1, the longer the crystallization completion time, the slower the crystal formation rate.

Further, F(T) refers to the cooling rate condition corresponding to a specific crystallization time (1 minute). A lower F(T) value means that crystallization may smoothly occur even under moderate cooling conditions. Therefore, it is also defined as difficulty of crystallization.

Meanwhile, a is a measure of how much the crystallization behavior is affected when cooling conditions change. A higher a value means that the crystallization behavior does not greatly change regardless of cooling conditions.

F(T) and a may be derived from results of differential scanning calorimetry (DSC) analysis using the Mo method described in a literature (Li, Yu, et al. Journal of Applied Polymer Science 138.2 (2021): 49652).

Specifically, F(T) and a may be obtained by a method including:

the step of DSC analysis, wherein the polyolefin is introduced into a DSC device, cooled to 20°C at a cooling rate of N °C/min (where N=5, 10, 15, and 20), and maintained at 20°C for 5 minutes, and then the cooled polyolefin is heated again to 160°C at a rate of 10°C/min to measure changes in the melting enthalpy;

the step of calculating the crystallization completion time, which is the time taken to reach the temperature corresponding to 20% relative crystallinity when cooled from 120°C at a cooling rate of N°C/min (where N=5, 10, 15, or 20), wherein 20% relative crystallinity is determined by the point where the enthalpy value is 20%, when the crystallization peaks between 30°C and 120°C in the differential temperature curve obtained as a result of the DSC analysis are set as the analysis area, and the total enthalpy value of the corresponding area is regarded as 100% relative crystallinity;

the step of obtaining a first-order linear relationship by plotting the crystallization completion time (log t) calculated above on the X-axis and the cooling rate (log Φ) on the Y axis, and then curve fitting; and

the step of determining the y-intercept and the slope in the resulting first-order linear relationship as F(T) and a, respectively.

More specifically, the polyolefin is introduced into the DSC device, heated to 160°C at a rate of 10°C/min, and then maintained for 5 minutes to remove thermal history.

The resulting polyolefin is cooled to 20°C at a cooling rate of 5°C/min, 10°C/min, 15°C/min, and 20°C/min (N °C/min, where N=5, 10, 15, and 20), respectively and maintained at 20°C for 5 minutes, then the cooled polyolefin is heated again to 160°C at a rate of 10°C/min, and changes in the melting enthalpy are measured.

The crystallization peaks between 30°C and 120°C in the differential temperature curve obtained as a result of the DSC analysis are set as the analysis area, and the total enthalpy value of the corresponding area is regarded as 100% relative crystallinity. The peak point corresponding to the enthalpy value of 20%, based on the above total enthalpy, is determined as 20% relative crystallinity, and the time taken to reach the temperature corresponding to 20% relative crystallinity when cooled from 120°C at a cooling rate of N°C/min (where N=5, 10, 15, or 20), i.e., the crystallization completion time is calculated, respectively.

The temperature corresponding to 20% relative crystallinity refers to the temperature at the peak point where the enthalpy value is 20%, based on the total enthalpy of the crystallization peaks between 30°C and 120°C.

Further, the enthalpy value may be obtained by integrating the crystallization peak area in the corresponding range.

Further, the crystallization completion time (min) may be specifically calculated from a difference between the time ($t_{120}$) at the point corresponding to 120°C and the time taken to reach 20% relative crystallinity, i.e., the value of $t_{120}$-$t_{20}$_N, wherein the time ($t_{120}$) at the point corresponding to 120°C in the differential temperature curve, and the time ($t_{20}$_N, where N is as defined above) taken to reach 20% relative crystallinity when cooled at each cooling rate of 5°C/min, 10°C/min, 15°C/min, and 20°C/min are determined, respectively.

The crystallization completion time is log t data (log($t_x$_5), log($t_x$_10), log($t_x$_15), log($t_x$_20) of the time taken to reach 20% relative crystallinity when cooled at a cooling rate of N°C/min (where N=5, 10, 15, or 20), wherein x is the value of relative crystallinity (%), and plotted by using x=20 and log(Φ) data (wherein Φ is the cooling rate (°C/min), Φ=5, 10, 15, 20). In this regard, the crystallization completion time, i.e., the time (log t) taken to reach 20% relative crystallinity is plotted on the X-axis, and the cooling rate (log Φ) is plotted on the Y-axis.

The first-order linear relationship is obtained by curve fitting the plotted curve using a data analysis software (Origin Pro, 9.1).

The resulting first-order linear relationship may be expressed as, for example, y=mx+b, and in the above relationship, the y-intercept(b) and the slope (m) are denoted by F(T) and a, respectively.

Further, the following Equation 1 in The Mo method may be derived by using the y-intercept as log F(T) and the absolute value of the slope as a in the first-order linear relationship.

[Equation 1]

$$\log \Phi = \log F(T) - a \log t$$

in Equation 1,

Φ represents the cooling rate, F(T) represents the difficulty of crystallization, a represents a ratio of Avrami parameter to Ozawa parameter (Avrami parameter/Ozawa parameter), and t represents the crystallization completion time, i.e., the time taken to reach 20% relative crystallinity.

With regard to the polyolefin according to the present invention, the difficulty of crystallization (F(T)) and the ratio (a) of Avrami parameter to Ozawa parameter, calculated using the Mo method after DSC analysis, satisfy the above requirements of (i) and (ii) under the condition of 20% relative crystallinity.

More specifically, the polyolefin has F(T) of 15 or less, or 14.5 or less, or 14.3 or less, or 14 or less, and 10 or more, or 11 or more, or 12 or more, or 13 or more under the condition of 20% relative crystallinity. Further, the polyolefin has a of more than1.45, or 1.46 or more, or 1.48 or more, and 1.6 or less, or 1.58 or less, or 1.55 or less.

As described, the polyolefin according to the present invention has the low F(T) value and the high a value, as compared to the existing polyolefin, and therefore, although the average crystallization rate is fast, it is not greatly affected by cooling rate conditions. Thus, even under the blown film processing conditions, wherein the cooling rate is considered relatively high, the crystallization rate does not greatly change, and a relatively small crystal structure may be created. The small crystal structure causes low surface haze, resulting in excellent transparency.

To explain this in relation to the crystal structure through CFC analysis, a highly crystalline polymer peak appears at a high elution temperature, and when the content is high, the polyolefin may exhibit a low F(T) due to highly crystalline polymer chains. However, when the molecular weight of the highly crystalline polymer is too high, the chain fluidity decreases, resulting in crystallization behavior that is insensitive to temperature changes.

Generally, when a linear low-density polyethylene film has a BOCD structure, the TREF crystalline region is widely distributed to have two or more peaks. This indicates coexistence of molecular chains, which contain few short chain branches (SCBs) to exhibit high crystallinity, and molecular chains, which contain a large amount of SCBs to form a macrostructure in which lamellar and tie molecules are mixed.

In the present disclosure, the polyolefin is subjected to CFC analysis using 1,2,4-trichlorobenzene as a solvent, and after separating into a low crystalline region and a highly crystalline region based on the elution temperature of 75°C, a content ratio (% by weight) of a low crystalline polymer (or fraction) which is eluted in a region of an elution temperature of 75°C or lower, e.g., in a region of an elution temperature of 35°C to 75°C, excluding a soluble fraction (SF) which is eluted in a region of an elution temperature of lower than 35°C, and its weight average molecular weight (g/mol) are defined as $W_L$ and $M_L$, respectively, and a content ratio (% by weight) of a highly crystalline polymer (or fraction) which is eluted in a region of an elution temperature of higher than 75°C and its weight average molecular weight (g/mol) are defined as $W_H$ and $M_H$, respectively.

$W_L$ and $M_L$ represent quantification of the section in which tie molecules are highly likely to be formed. Only when an appropriate level or more of a molecular weight is secured, excellent drop impact strength and impact resistance may be achieved due to tie molecules. In addition, $W_H$ and $M_H$ represent the section vulnerable to impact due to high crystallinity, but strength and stiffness may be sufficiently strengthened only when 50% by weight or more thereof is included in the polymer. In addition, only when a specific range of molecular weight, e.g., 70,000 g/mol to 110,000 g/mol is secured, the relaxation time may be increased during the film cooling process, thereby suppressing excessive growth of a macromolecule structure with spherulitic morphology, and as a result, transparency may be controlled. However, when $W_H$ and $M_H$ are excessively high, physical properties may deteriorate, and therefore, it is desirable that $W_H$ is 60% by weight or less and $W_H$ is 110,000 g/mol or less.

When the molecular weight and content of the low crystalline region must not be excessively high, it is possible to control light scattering due to the lamellar-tie molecular structure. In addition, when the molecular weight of the highly crystalline region is high, spherulite growth may be suppressed by increasing the relaxation time. However, when the content is excessively high, transparency may be impaired due to high crystallinity.

For example, in the TREF curve, when the peak is not visible or the peak height is low in the low crystalline region of the elution temperature of 35°C to 75°C, even though the content of highly crystalline polymer eluted in the region of the

elution temperature of higher than 75°C is sufficient, nuclei where crystallization occurs due to high crystallinity may be quickly generated. Further, when the molecular weight of the polymer in the corresponding highly crystalline region is large or small, the speed at which the molecular chain moves during the crystallization process may be affected. If the polymer in the highly crystalline region has a relatively large molecular weight, the chain movement slows down, resulting in insufficient crystal growth at the nucleation site and the formation of small spherulites, which may reduce roughness and scattering, and as a result, the haze property may be improved. However, when the polymer in the highly crystalline region has a relatively small molecular weight, large spherulites are formed due to the growth of the crystal structure, which increases roughness and scattering, resulting in poor haze property.

Accordingly, with regard to the polyolefin according to the present invention, a peak height ratio of $A_H/A_1$ satisfies the following requirement of (iii) in the TREF curve by CFC analysis:

(iii)

$$A_H/A_1 \geq 1.8$$

in (iii),

$A_H$ represents a peak height of a highest peak in the TREF curve, and

$A_1$ represents a peak height of a lowest peak when the lowest peak in the TREF curve exists at an elution temperature of 40°C to 75°C, and represents a height at an elution temperature of 65°C when the lowest peak in the TREF curve does not exist at an elution temperature of 40°C to 75°C, i.e., when the lowest peak exists in the temperature range outside the elution temperature of 40°C to 75°C, or when the lowest peak does not exist because the TREF curve has a single peak.

FIG. 2 shows $A_1$ and $A_H$ in the TREF curve of the polyolefin of Example 1 below. FIG. 2 is only an example for explaining the present invention, and the present invention is not limited thereto.

Referring to FIG. 2, in the TREF curve of the polyolefin of Example 1, the highest peak appeared at an elution temperature of 89.4°C, and the lowest peak appeared at an elution temperature of 66.1°C. Accordingly, $A_H$ of the polyolefin of Example 1 is the peak height of the highest peak that appeared at the elution temperature of 89.4°C, and $A_1$ is the peak height of the lowest peak that appeared at the elution temperature of 66.1 °C.

The $A_H/A_1$ defines the relative amount of highly crystalline polymer eluted in the high temperature region. The polyolefin according to the present invention has a sufficient amount of highly crystalline polymer by satisfying the above-mentioned requirement. Accordingly, nuclei that crystallize in the high elution temperature region are slowly generated or do not sufficiently grow, resulting in the formation of small spherulites, which may lead to reduction in roughness and scattering, thereby exhibiting the improved haze property.

More specifically, $A_H/A_1$ of the polyolefin according to the present invention is 1.8 or more, or 1.81 or more, or 2 or more, and 3 or less, or 2.8 or less, or 2.7 or less.

In addition, the polyolefin according to the present invention may exhibit superior physical properties by further satisfying the optimal ranges of requirements of $W_L$, $M_L$, $W_H$ and $M_H$, in addition to the crystal structure requirements described above.

Specifically, the polyolefin has $W_L$ of 33% by weight to 45% by weight, which represents a content ratio (% by weight) of a low crystalline polymer which is eluted in a region of an elution temperature of 75°C or lower, e.g., in a region of an elution temperature of 35°C to 75°C, excluding a soluble fraction (SF), in the TREF curve by CFC analysis, and has $M_L$ of 130,000 g/mol or more, which represents a weight average molecular weight of the low crystalline polymer. In this regard, the soluble fraction (SF) refers to a fraction which is eluted in a region of an elution temperature of lower than 35°C in the TREF curve. Further, the content ratio (% by weight) of the low crystalline polymer is based on the total weight of all eluted fractions.

More specifically, $W_L$ may be 33 % by weight or more, or 37 % by weight or more, or 39% by weight or more, and 45 % by weight or less, or 43 % by weight or less, or 42 % by weight or less, and $M_L$ may be 130,000 g/mol or more, or 132,000 g/mol or more, or 133,000 g/mol or more, and 250,000 g/mol or less, or 230,000 g/mol or less, or 210,000 g/mol or less.

Further, the polyolefin has $W_H$ of 50% by weight to 60% by weight, and $M_H$ of 70,000 g/mol to 110,000 g/mol, which represent a content ratio (% by weight) of a highly crystalline polymer which is eluted in a region of an elution temperature of higher than 75°C in the TREF curve, and a weight average molecular weight(g/mol) of the highly crystalline polymer, respectively. More specifically, $W_H$ may be 50 % by weight or more, or 51 % by weight or more, or 54 % by weight or more, and 60% by weight or less, or 58 % by weight or less, or 56% by weight or less, and $M_H$ may be 70,000 g/mol or more, or 70,500 g/mol or more, or 80,000 g/mol or more, and 110,000 g/mol or less, or 109,000 g/mol or less. In this regard, the content ratio (% by weight) of the highly crystalline polymer is based on the total weight of all eluted fractions.

Previously, a method of introducing long chain branches (LCBs) into mLLDPE was proposed in order to improve transparency. In general, mLLDPE with LCBs has significantly low $M_L$ and $W_L$ because its crystallization characteristics

change unimodally. Specifically, the polyolefin of the present invention has $M_L$ of 130,000 g/mol or more, and $W_L$ of 33% by weight to 45% by weight, while the existing mLLDPE with LCBs has $M_L$ of 20,000 g/mol to 60000 g/mol, or 27,000 g/molto 28000 g/mol, and $W_L$ of 40% by weight or less, or 20% by weight to 40% by weight. Accordingly, the existing mLLDPE with LCBs has a reduced area where tie molecules are formed, due to low $M_L$ and $W_L$, making it difficult to exhibit sufficient dart drop impact strength.

Further, the polyolefin according to the present invention has an elution temperature ($Te_L$) of the lowest peak of 60°C to 90°C, and an elution temperature ($Te_H$) of the highest peak of 80°C to 100°C in the TREF curve. More specifically, $Te_L$ may be 60°C or higher, or 64°C or higher, 90°C or lower, or 85°C or lower, and Ten may be 80°C or higher, or 85°C or higher, or 89°C or higher, and 100°C or lower, or 95°C or lower. These peak characteristics and the high $A_H/A_1$ value indicate that there is a high possibility that highly crystalline molecules are involved in the film manufacturing process, and as the $Te_L$ and Ten and $A_H/A_1$ values appear in the above range of elution temperature, the polyolefin may exhibit more improved effect in terms of haze.

More specifically, with regard to the polyolefin, the content ratio of the soluble fraction (SF) eluted in the region of the elution temperature of lower than 35°C in the TREF curve by CFC analysis may be 1% by weight or more, or 4% by weight or more, and 15% by weight or less, or 12% by weight or less, based on the total weight of all eluted fractions.

Further, with regard to the polyolefin, the content ratio of the fraction or polymer eluted in the region of the elution temperature of 35°C or higher and lower than 55°C may be 5% by weight or more, or 6% by weight or more, and 15% by weight or less, or 10% by weight or less, based on the total weight of all eluted fractions.

Further, with regard to the polyolefin, the content ratio of the fraction or polymer eluted in the region of the elution temperature of 55°C or higher and 75°C or lower may be 20% by weight or more, or 25% by weight or more, and 40% by weight or less, or 35% by weight or less, based on the total weight of all eluted fractions.

Further, with regard to the polyolefin, the content ratio of the fraction or highly crystalline polymer eluted in the region of the elution temperature of higher than 75°C may be 50% by weight or more, 51% by weight or more, and 60% by weight or less, or 56% by weight or less, based on the total weight of all eluted fractions, as described above.

Meanwhile, in the present invention, the content ratio of the fraction or polymer eluted in a certain elution temperature range is calculated as a percentage (% by weight or wt%) of the content ratio of the fraction or polymer eluted in the corresponding elution temperature range, based on the total weight of all eluted fractions obtained through CFC analysis.

Further, in the present invention, the crystal structure characteristics of the polyolefin may be determined through CFC analysis. The specific measurement method and measurement conditions are as described in Experimental Example below.

In addition to the above-described crystal structure characteristics, the polyolefin according to the present invention exhibits a molecular weight distribution of 2.5 to 4. More specifically, the polyolefin according to the present invention has a molecular weight distribution of 2.5 or more, or 2.8 or more, or 2.85 or more, or 2.87 or more, and 4 or less, or 3.8 or less. The polyolefin may exhibit excellent mechanical strength properties by having the above range of molecular weight distribution. When the molecular weight distribution of the polyolefin is less than 2.5, it is apprehended that mechanical properties deteriorate, and when it exceeds 4, it is apprehended that haze property deteriorates.

Meanwhile, in the present invention, with regard to the molecular weight distribution of the polyolefin, MWD is determined by measuring Mw and Mn using gel permeation chromatography, respectively and then calculating a ratio (Mw/Mn) of Mw to Mn therefrom. The specific measurement method and conditions are as described in Experimental Example below.

In addition, the polyolefin according to the present invention exhibits a density of 0.915 g/cc to 0.925 g/cc, more specifically, 0.915 g/cc or more, or 0.917 g/cc or more, and 0.925 g/cc or less, or 0.920 g/cc or less, as measured according to ASTM D1505.

As the polyolefin exhibits the above range of density, it may exhibit excellent mechanical properties.

Further, the polyolefin according to the present invention may have a melt index ($MI_{2.16}$) of 0.5 g/10 min to 1.5 g/10 min, more specifically, 0.5 g/10 min or more, or 0.9 g/10 min or more, or 0.95 g/10 min or more, and 1.5 g/10 min or less, or 1.2 g/10 min or less, or 1.05 g/10 min or less, as measured according to ASTM D1238 standard at a temperature of 190°C under a load of 2.16 kg.

Further, the polyolefin may have a melt index ($MI_{21.6}$) of 10 g/10 min to 50 g/10 min, more specifically, 10 g/10 min or more, or 20 g/10 min or more, or 25 g/10 min or more, and 50 g/10 min or less, or 40 g/10 min or less, or 35 g/10 min or less, as measured according to ASTM D1238 standard at a temperature of 190°C under a load of 21.6 kg.

Further, the polyolefin may have a MFRR ($MI_{21.6}/MI_{2.16}$) of 20 to 30, more specifically, 20 or more, or 25 or more, or 26 or more, and 30 or less, or 29.5 or less, which is a ratio obtained by dividing the melt index ($MI_{21.6}$) measured according to ASTM D1238 standard at a temperature of 190°C under a load of 21.6 kg by the melt index ($MI_{2.16}$) measured according to ASTM D1238 standard at a temperature of 190°C under a load of 2.16 kg.

The polyolefin according to the present invention has the above-described crystal structure characteristics as well as the optimal ranges of density and melt index, thereby exhibiting remarkably improved impact strength property and

transparency along with excellent processability.

The polyolefin according to the present invention is specifically a copolymer of ethylene and olefin monomer.

The olefinic monomer may be ethylene, alpha-olefin, cyclic olefin, a diene or triene olefin having two or more double bonds.

Specific examples of the olefinic monomer may include ethylene, propylene, 1-butene, 1-pentene, 4-methyl-1-pentene, 1-hexene, 1-heptene, 1-octene, 1-decene, 1-undecene, 1-dodecene, 1-tetradecene, 1-hexadecene, 1-eicosene, norbornene, norbornadiene, ethylidenenorbornene, phenylnorbornene, vinylnorbomene, dicyclopentadiene, 1,4-butadiene, 1,5-pentadiene, 1,6-hexadiene, styrene, alpha-methylstyrene, divinylbenzene, 3-chloromethylstyrene, etc., and two or more of these monomers may be also mixed and copolymerized.

More specifically, the polyolefin is a copolymer of ethylene/C4-C10 alpha olefin, and much more specifically, a copolymer of ethylene/1-hexene.

The polyolefin having the above characteristics according to the present invention may be prepared by, for example, a preparation method including the step of subjecting ethylene and the olefin monomer to a slurry polymerization reaction while introducing hydrogen in the presence of a catalyst composition including a first transition metal compound represented by the following Formula 1 and a second transition metal compound represented by the following Formula 2 at a molar ratio of 1:1 to 1:3:

[Formula 1]

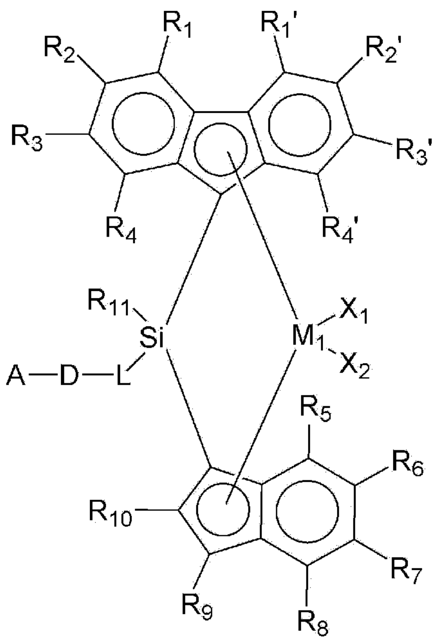

in Formula 1,

$R_1$ to $R_8$, and $R_1'$ to $R_4'$ are the same as or different from each other, and each independently hydrogen, halogen, a $C_{1-20}$ alkyl group, a $C_{2-20}$ alkenyl group, a $C_{6-20}$ aryl group, a $C_{7-20}$ alkylaryl group, or a $C_{7-20}$ arylalkyl group;

$R_9$ and $R_{10}$ are the same as or different from each other, and each independently hydrogen, a $C_{1-20}$ alkyl group, a $C_{2-20}$ alkenyl group, a $C_{6-20}$ aryl group, a $C_{7-20}$ alkylaryl group, or a $C_{7-20}$ arylalkyl group, or $R_{10}$ and $R_{11}$ may be connected to each other to form one or more aliphatic rings, aromatic rings, or hetero rings;

$R_{11}$ is hydrogen, halogen, a $C_{1-20}$ alkyl group, a $C_{2-20}$ alkenyl group, a $C_{6-20}$ aryl group, a $C_{7-20}$ alkylaryl group, or a $C_{7-20}$ arylalkyl group;

L is a $C_{1-10}$ linear or branched alkylene group;

D is -O-, -S-, -N(R)- or -Si(R)(R')-, wherein R and R' are the same as or different from each other, and each independently hydrogen, halogen, a $C_{1-20}$ alkyl group, a $C_{2-20}$ alkenyl group, or a $C_{6-20}$ aryl group;

A is hydrogen, a $C_{1-20}$ alkyl group, a $C_{2-20}$ alkenyl group, a $C_{6-20}$ aryl group, a $C_{7-20}$ alkylaryl group, or a $C_{7-20}$ arylalkyl group;

$M_1$ is a Group 4 transition metal;

$X_1$ and $X_2$ are the same as or different from each other, and each independently halogen, a $C_{1-20}$ alkyl group, a $C_{2-20}$ alkenyl group, a $C_{6-20}$ aryl group, a nitro group, an amido group, a $C_{1-20}$ alkylsilyl group, a $C_{1-20}$ alkoxy group, or a $C_{1-20}$

sulfonate group;

[Formula 2]

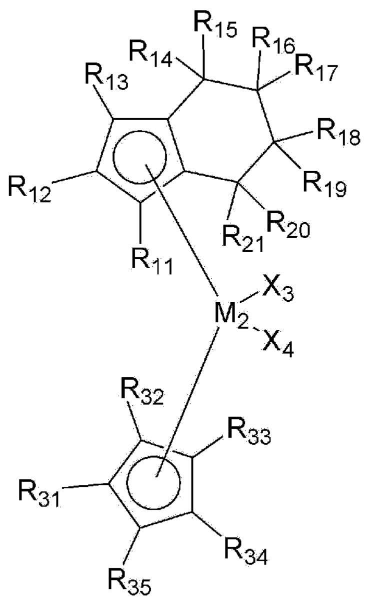

in Formula 2,

$R_{11}$ to $R_{21}$ are the same as or different from each other, and each independently hydrogen, halogen, a $C_{1-20}$ alkyl group, a $C_{2-20}$ alkenyl group, a $C_{6-20}$ aryl group, a $C_{7-20}$ alkylaryl group, or a $C_{7-20}$ arylalkyl group;
$R_{31}$ to $R_{35}$ are each independently, hydrogen, a $C_{1-20}$ alkyl group, a $C_{2-20}$ alkenyl group, a $C_{6-20}$ aryl group, a $C_{7-20}$ alkylaryl group, a $C_{7-20}$ arylalkyl group, a $C_{1-20}$ alkoxy group, a $C_{2-20}$ alkoxyalkyl group, or a $C_{7-30}$ aryloxyalkyl, wherein at least one of $R_{31}$ to $R_{35}$ is a $C_{1-20}$ alkyl group, a $C_{1-20}$ alkoxy group, a $C_{2-20}$ alkoxyalkyl group, or a $C_{7-30}$ aryloxyalkyl,
$M_2$ is a Group 4 transition metal; and
$X_3$ and $X_4$ are the same as or different from each other, and each independently halogen, a $C_{1-20}$ alkyl group, a $C_{2-20}$ alkenyl group, a $C_{6-20}$ aryl group, a nitro group, an amido group, a $C_{1-20}$ alkylsilyl group, a $C_{1-20}$ alkoxy group, or a $C_{1-20}$ sulfonate group.

In the transition metal compounds of Formulae 1 and 2, the substituents will be described in more detail below.

The $C_{1-20}$ alkyl group may include linear or branched alkyl groups, and specifically may include, but is not limited to, a methyl group, an ethyl group, a propyl group, an isopropyl group, an n-butyl group, a tert-butyl group, a pentyl group, a hexyl group, a heptyl group, an octyl group and the like.

The $C_{2-20}$ alkenyl group may include linear or branched alkenyl groups, and specifically may include, but is not limited to, an allyl group, an ethenyl group, a propenyl group, a butenyl group, a pentenyl group, and the like.

The $C_{6-20}$ aryl group may include monocyclic or fused cyclic aryl groups, and specifically may include, but is not limited to, a phenyl group, a biphenyl group, a naphthyl group, a phenanthrenyl group, a fluorenyl group, and the like.

The $C_{7-20}$ alkylaryl group, in which one or more hydrogens of aryl are substituted with alkyl, may specifically include methylphenyl, ethylphenyl, n-propylphenyl, iso-propylphenyl, n-butylphenyl, iso-butylphenyl, tert-butylphenyl, cyclohexylphenyl, and the like.

The $C_{7-20}$ arylalkyl group is a substituent in which one or more hydrogens of alkyl are substituted with aryl, and specifically, $C_{7-40}$ arylalkyl may include a benzyl group, phenylpropyl, phenylhexyl, and the like.

The $C_{1-20}$ alkoxy group may include, but is not limited to, a methoxy group, an ethoxy group, a phenyloxy group, a cyclohexyloxy group, and the like.

The $C_{2-20}$ alkoxyalkyl group, in which one or more hydrogens of the alkyl group as described above are substituted with alkoxy groups, may specifically include, but is not limited to, alkoxyalkyl groups such as a methoxymethyl group, a methoxyethyl group, an ethoxymethyl group, an iso-propoxymethyl group, an iso-propoxyethyl group, an iso-propoxyhexyl group, a tert-butoxymethyl group, a tert-butoxyethyl group, a tert-butoxyhexyl group, and the like; or aryloxyalkyl groups such as a phenoxyhexyl group and the like.

The $C_{6-20}$ aryloxy group may specifically include, but is not limited to, phenoxy, biphenoxy, naphthoxy and the like.

Further, the $C_{5-20}$ heteroaryl group may include, but is not limited to, monocyclic or fused cyclic heteroaryl groups, and may include, but is not limited to, a carbazolyl group, a pyridyl group, a quinoline group, an isoquinoline group, a thiophenyl group, a furanyl group, an imidazole group, an oxazolyl group, a thiazolyl group, a triazine group, a tetrahydropyranyl group, a tetrahydrofuranyl group, and the like.

The halogen may be fluorine (F), chlorine (Cl), bromine (Br) or iodine (I).

The above-described substituents are optionally substituted with, within the range of achieving the same or similar effects as the desired effect, one or more substituents selected from the group consisting of a hydroxy group; halogen; an alkyl group or an alkenyl group, an aryl group, an alkoxy group; an alkyl group or an alkenyl group, an aryl group, an alkoxy group including one or more of hetero atoms of Group 14 to Group 16; a silyl group; an alkylsilyl group or an alkoxysilyl group; a phosphine group; a phosphide group; a sulfonate group; and a sulfonic acid.

Further, the Group 4 transition metal may include, but is not limited to, titanium (Ti), zirconium (Zr), hafnium (Hf) and the like.

In detail, the first transition metal compound of Formula 1 forms a structure in which fluorene derivatives are cross-linked by a bridge, and has an unshared electron pair capable of acting as a Lewis base in the structure of a ligand. Therefore, when supported on the surface having a Lewis acid characteristic of a support, it exhibits high polymerization activity even though supported. Further, as the first transition metal compound includes the electronically rich fluorene groups, it has high activity, thereby polymerizing high-molecular weight olefin-based polymers.

Specifically, in the first transition metal compound, $R_1$ to $R_4$, and $R_1$' to $R_4$' of Formula 1 are each independently hydrogen; a $C_{1-12}$ alkyl group such as a methyl group, an ethyl group, a propyl group, an isopropyl group, an n-butyl group, a tert-butyl group, a pentyl group, a hexyl group, a heptyl group, an octyl group, etc.; a $C_{6-12}$ aryl group such as a phenyl group, etc.; a $C_{7-13}$ alkylaryl group such as a 3,5-dimethylphenyl group, a t-butylphenyl group, etc.; a $C_{7-13}$ arylalkyl group such as a benzyl group, etc. More specifically, $R_1$ to $R_4$, and $R_1$' to $R_4$' of Formula 1 may be all hydrogens.

Further, in Formula 1, $R_5$ to $R_8$ may be each independently hydrogen; a $C_{1-12}$ alkyl group such as a methyl group, an ethyl group, a propyl group, an isopropyl group, an n-butyl group, a tert-butyl group, a pentyl group, a hexyl group, a heptyl group, an octyl group, etc.; a $C_{6-12}$ aryl group such as a phenyl group, etc.; a $C_{7-13}$ alkylaryl group such as a 3,5-dimethylphenyl group, a t-butylphenyl group, etc.; or a $C_{7-13}$ arylalkyl group such as a benzyl group, etc. More specifically, $R_5$ to $R_7$ may be all hydrogens, and $R_8$ may be hydrogen; a $C_{1-12}$ alkyl group such as a methyl group, an ethyl group, a propyl group, an isopropyl group, an n-butyl group, a tert-butyl group, a pentyl group, a hexyl group, a heptyl group, an octyl group, etc.; a $C_{6-12}$ aryl group such as a phenyl group, etc.; a $C_{7-13}$ alkylaryl group such as a 3,5-dimethylphenyl group, a t-butylphenyl group, etc.; or a $C_{7-13}$ arylalkyl group such as a benzyl group, etc.

Further, in Formula 1, $R_9$ and $R_{10}$ may be each independently hydrogen, a $C_{1-12}$ alkyl group, a $C_{2-12}$ alkenyl group, a $C_{6-12}$ aryl group, a $C_{7-13}$ alkylaryl group, or a $C_{7-13}$ arylalkyl group, or $R_9$ and $R_{10}$ may be connected to each other to form one or more aromatic rings. More specifically, in Formula 1, $R_9$ may be hydrogen, and $R_{10}$ may be a $C_{1-12}$ or $C_{1-6}$ alkyl group such as a methyl group, an ethyl group, a propyl group, an isopropyl group, an n-butyl group, a tert-butyl group, etc.; or $R_9$ and $R_{10}$ may be connected to each other to form a benzene ring.

Much more specifically, $R_5$ to $R_7$, and $R_9$ may be all hydrogens, and $R_8$ may be hydrogen; a $C_{6-12}$ aryl group such as a phenyl group, etc.; or a $C_{7-13}$ alkylaryl group such as a 3,5-dimethylphenyl group, a t-butylphenyl group, etc., and $R_{10}$ may be a $C_{1-6}$ alkyl group such as a methyl group, an ethyl group, a propyl group, an isopropyl group, an n-butyl group, a tert-butyl group, etc.; $R_5$ to $R_8$ may be all hydrogens, and $R_9$ and $R_{10}$ may be connected to each other to form a benzene ring.

Further, in Formula 1, $R_{11}$ may be more specifically a $C_{1-12}$ or $C_{1-6}$ alkyl group such as a methyl group, an ethyl group, a propyl group, an isopropyl group, an n-butyl group, a tert-butyl group, etc. Much more specifically, $R_{11}$ may be a methyl group or an ethyl group.

Further, in Formula 1, L may be specifically a $C_{4-8}$ linear or branched alkylene group. More specifically, L may be butylene, pentylene, or hexylene.

Further, in Formula 1, D may be specifically -O-.

Further, in Formula 1, A may be specifically hydrogen; a $C_{1-12}$ alkyl group such as a methyl group, an ethyl group, a propyl group, an isopropyl group, an n-butyl group, a tert-butyl group, a pentyl group, a hexyl group, a heptyl group, an octyl group, etc.; a $C_{6-12}$ aryl group such as a phenyl group, etc.; or a $C_{7-13}$ alkylaryl group such as a 3,5-dimethylphenyl group, a t-butylphenyl group, etc.; or a $C_{7-13}$ arylalkyl group such as a benzyl group, and more specifically, A may be hydrogen, a methyl group, an ethyl group, a propyl group, an isopropyl group, an n-butyl group, a tert-butyl group.

Further, in Formula 1, $M_1$ may be specifically zirconium (Zr) or hafnium (Hf), and more specifically zirconium (Zr).

Further, in Formula 1, $X_1$ and $X_2$ may be each independently halogen, and more specifically chlorine.

More specifically, the first transition metal compound represented by Formula 1 may be any one selected from the group consisting of the following compounds, but is not limited thereto:

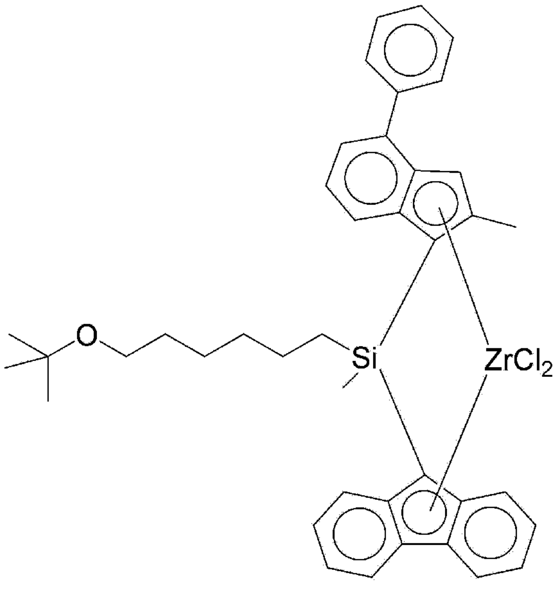
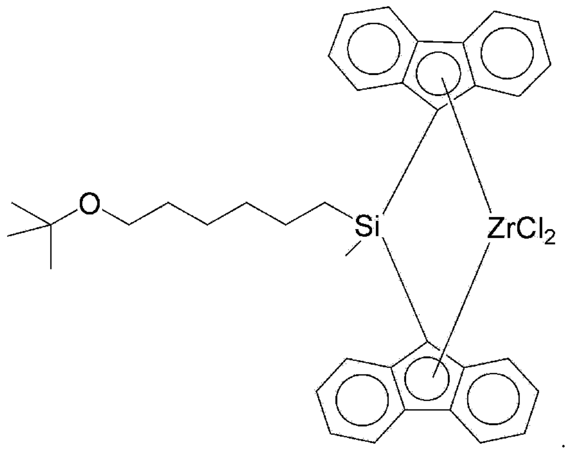

Meanwhile, the non-crosslinked second transition metal compound represented by Formula 2 has a tetrahydroindene structure, in which indene is reduced, along with a cyclopentadiene as ligands, and thus its hydrogen reactivity is relatively relaxed, making it easy to reduce the weight average molecular weight and to control PDI according to hydrogen input, as compared to the existing transition metal compounds for preparing a low-molecular-weight polymer, based on the indene structure.

Further, of the two ligands, with regard to the ligand of the tetrahydroindene structure, the cyclohexane structures of the tetrahydroindene structure are all unsubstituted, i.e., $R_{14}$ to $R_{21}$ are all hydrogens. Further, the cyclopentadiene structure in the tetrahydroindene structure is unsubstituted, i.e., $R_{11}$, $R_{12}$ and $R_{13}$ are all hydrogens; or at least one of carbons at positions 1 to 3, i.e., at least one of $R_{11}$, $R_{12}$, and $R_{13}$ is a $C_{1-12}$ alkyl group, a $C_{2-12}$ alkenyl group, a $C_{6-12}$ aryl group, a $C_{7-13}$ alkylaryl group, or a $C_{7-13}$ arylalkyl group, and the rest may be hydrogen. Considering the excellent improvement effect according to optimization of substituents, the ligands of the tetrahydroindene structure may be all unsubstituted, i.e., $R_{11}$ to $R_{21}$ may be all hydrogens.

Meanwhile, in Formula 2, with regard to the ligand of the cyclopentadiene structure, at least one of the substituents of $R_{31}$ to $R_{35}$ may be substituted. Specifically, at least one of $R_{31}$ to $R_{35}$ is a $C_{1-12}$ alkyl group, a $C_{1-12}$ alkoxy group, a $C_{2-12}$ alkoxyalkyl group, or a $C_{7-18}$ aryloxyalkyl group, and the rest may be hydrogen. More specifically, one of $R_{31}$ to $R_{35}$ is a $C_{1-12}$ alkyl group, a $C_{1-12}$ alkoxy group, or a $C_{2-12}$ alkoxyalkyl group, and the rest may be all hydrogens; or two of $R_{31}$ to $R_{35}$ are $C_{1-12}$ alkyl groups, and the rest may be all hydrogens; or $R_{31}$ to $R_{35}$ may be all $C_{1-12}$ alkyl groups.

Much more specifically, one of $R_{31}$ to $R_{35}$ is a $C_{1-6}$ alky group such as methyl, ethyl, propyl, or butyl; a $C_{1-6}$ alkoxy group such as methoxy, ethoxy, propoxy, or butoxy; or a $C_{2-12}$ alkoxyalkyl group such as t-butoxyhexyl, and the rest may be all hydrogens. Further, two of $R_{31}$ to $R_{35}$ are $C_{1-6}$ alky groups such as methyl, ethyl, propyl, or butyl, and the rest may be all hydrogens. Further, $R_{31}$ to $R_{35}$ are all $C_{1-4}$ alkyl groups such as methyl and ethyl.

Further, in Formula 2, $M_2$ may be specifically zirconium (Zr) or hafnium (Hf), and more specifically zirconium (Zr).

Further, in Formula 2, $X_3$ and $X_4$ may be each independently halogen, and more specifically chlorine.

More specifically, the second transition metal compound may be any one of compounds represented by the following formulae, but is not limited thereto:

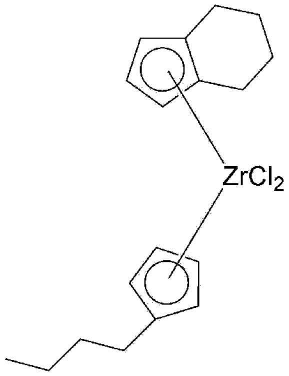
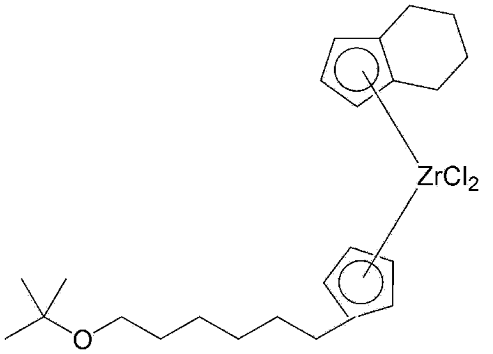
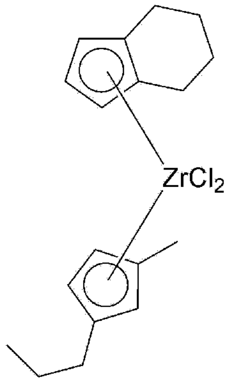

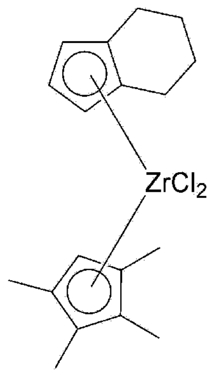

.

The above-described first and second transition metal compounds may be synthesized by applying known reactions, and for more detailed synthesis methods, Examples may be served as a reference.

Meanwhile, in the present invention, the first transition metal compound may be in the form of a meso isomer, a racemic isomer, or a mixed form thereof. In contrast, the second transition metal compound may include no meso isomer and no racemic isomer.

As used herein, the term "racemic form" or "racemate" or "racemic isomer" means a form in which the same substituents on two ligands are on the opposite side to the plane containing the transition metal represented by $M_1$ in Formula 1, for example, a transition metal such as zirconium (Zr) or hafnium (Hf) and the center of the ligand moiety.

Further, as used herein, the term "meso form" or "meso isomer" is a stereoisomer of the above-mentioned racemic isomer, and means a form in which the same substituents on two ligands are on the same side to the plane containing the transition metal represented by $M_1$ in Formula 1, for example, a transition metal such as zirconium (Zr) or hafnium (Hf) and the center of the ligand moiety.

In the hybrid supported catalyst according to one embodiment of the present disclosure, the first transition metal compound and the second transition metal compound may be supported at a molar ratio of 1:1 to 1:3, based on the first transition metal compound, considering the excellent catalytic activity and polymerizability.

When they are included at the above molar ratio, the catalyst exhibits high activity in the olefin polymerization, thereby preparing a polyolefin having improved drop impact strength and haze properties along with excellent processability. More specifically, the molar ratio may be 1:1 to 1:2, or 1:1 to 1:1.5, or 1:1.1 to 1:1.2.

Meanwhile, the first and second transition metal compounds may be used in the form of a supported catalyst of being supported on a silica support.

As the support, a support containing a hydroxyl group on the surface may be used, and preferably, it may contain highly reactive hydroxyl group and siloxane group on the surface, which is dried to remove water on the surface. For example, silica, silica-alumina, and silica-magnesia which are dried at a high temperature may be used. These supports may usually include oxide, carbonate, sulfate, and nitrate components such as $Na_2O$, $K_2CO_3$, $BaSO_4$, and $Mg(NO_3)_2$, etc.

When used as the supported catalyst, the produced polymer has excellent particle shape and bulk density, and the catalyst may be suitably used in traditional slurry polymerization, bulk polymerization, and gas phase polymerization processes. In addition, among various supports, silica supports support the transition metal compound by chemically binding functional groups thereof, and therefore, there is little catalyst released from the surface of the support during the polymerization process, and as a result, when the polypropylene is prepared by slurry polymerization or gas phase polymerization, a fouling phenomenon, sticking to the wall surface of the reactor or with itself, may be minimized.

Further, when supported on the support, the first and second transition metal compounds may be supported in the content range of 0.01 mmol to 100 mmol, more specifically, 0.01 mmol or more, or 0.1 mmol or more, or 1 mmol or more, or 10 mmol or more, or 20 mmol or more, and 100 mmol or less, or 85 mmol or less, or 60 mmol or less, based on 1,000 g of the support. When supported within the above content range, the supported catalyst may exhibit appropriate catalytic activity, which may be advantageous in terms of maintaining catalytic activity and economic efficiency.

In addition, the catalyst may further include a cocatalyst in terms of improving the high activity and process stability.

The cocatalyst may include one or more compounds selected from compounds represented by the following Formula 3:

[Formula 3] $-[Al(R_a)-O]_m-$

in Formula 3,

$R_a$ are the same as or different from each other, and each independently halogen; a $C_{1-20}$ hydrocarbyl group; or a $C_{1-20}$

hydrocarbyl group substituted with halogen; and
m is an integer of 2 or more.

Examples of the compounds represented by Formula 3 may include alkyl aluminoxane-based compounds such as methyl aluminoxane, ethyl aluminoxane, isobutyl aluminoxane, or butyl aluminoxane, etc., and any one thereof or a mixture of two or more thereof may be used.

Among the above compounds, the cocatalyst may be more specifically an alkyl aluminoxane-based cocatalyst such as methyl aluminoxane.

The alkyl aluminoxane-based cocatalyst stabilizes the transition metal compound and acts as a Lewis acid, thereby further improving the catalytic activity by including a metal element capable of forming a bond through a Lewis acid-base interaction with the functional group which is introduced into the bridge group of the transition metal compound.

In addition, the amount of the cocatalyst to be used may be appropriately adjusted depending on the physical properties or effects of the desired catalyst and polymer, and a polyolefin including the same. For example, when silica is used as the support, the cocatalyst may be supported in an amount of 100 g or more, or 500 g or more, or 700 g or more, and 1,000 g or less, or 900 g or less, or 800 g or less, based on the weight of the support, e.g., 1,000 g of silica.

The catalyst having the above-described structure may be prepared by a preparation method including the step of supporting the cocatalyst compound on the support, and the step of supporting the transition metal compound on the support, wherein the supporting order of the cocatalyst and the transition metal compound may vary as needed.

Considering the effect of the supported catalyst with the structure which is determined according to the supporting order, supporting the transition metal compound after supporting the cocatalyst on the support ensures that the prepared supported catalyst has high catalytic activity and superior process stability in the polymer preparation process. Further, the supporting order of the first and second transition metal compounds is also not particularly limited, and the second transition metal compound may be supported after supporting the first transition metal compound, or they may be supported in the opposite order. Alternatively, the first and second transition metal compounds may be supported at the same time.

Meanwhile, the polymerization reaction for preparing the polyolefin is performed under conditions of introducing hydrogen gas.

Specifically, the hydrogen gas may be introduced in an amount of 5 ppm to 30 ppm, based on the total weight of olefin monomer. More specifically, the hydrogen gas may be introduced in an amount of 5 ppm or more, or 10 ppm or more, or 15 ppm or more, and 30 ppm or less, or 28 ppm or less, based on the total weight of olefin monomer.

The hydrogen gas activates the inactive site of the metallocene catalyst and causes a chain transfer reaction to control the molecular weight. The transition metal compound used in the present invention has excellent hydrogen reactivity, and therefore, by controlling the amount of hydrogen gas used during the polymerization process, a polyolefin having desired levels of molecular weight and melt index may be effectively obtained.

The polymerization process may be performed by a continuous polymerization process, for example, may employ various polymerization processes known as polymerization reactions of olefin monomers, such as a continuous solution polymerization process, a bulk polymerization process, a suspension polymerization process, a slurry polymerization process or an emulsion polymerization process, a gas phase polymerization process, etc. Specifically, in the present invention, a slurry polymerization process is performed to realize the above-described physical properties of polyolefin.

Further, the polymerization reaction may be performed at a temperature of 60°C or higher, or 70°C or higher, or 80°C or higher, 90°C or lower, or 85°C or lower. Further, the polymerization reaction may be performed under a pressure of 10 bar or more, or 20 bar or more, and 50 bar or less, or 40 bar or less. When polymerization is allowed under such temperature and pressure, the desired physical properties of polyolefin may be more easily realized.

The polyolefin prepared by the above-described preparation method has a crystal structure capable of securing excellent transparency along with the BOCD structure, as described above, thereby exhibiting transparency along with excellent dart drop impact strength property. Accordingly, the polyolefin may be useful in the production of films, specifically, blown films, which require high mechanical properties along with excellent transparency.

Accordingly, the present invention provides a resin composition including the polyolefin, specifically, a composition for producing a film.

Further, the present invention provides a film, specifically, a blown film which is produced by using the polyolefin or the resin composition.

The film according to the present invention may be produced according to a common film production method, except for using the polyolefin. For example, the film may be produced by mixing the polyolefin, and optionally, additives such as antioxidants and processing aids to prepare a composition for producing a film, and extruding the composition into a film using an extruder.

In addition, the film may exhibit excellent transparency and mechanical properties by including the polyolefin.

Specifically, the film has a dart drop impact strength of 1600 gf or more, or 1800 gf or more, as measured

according to the Method A of ASTM D 1709, under conditions of a Blown-Up Ratio (BUR) of 2.3 to 3, more specifically 2.5 to 3, and much more specifically 2.5, and a film thickness of 50 μm to 65 μm, and has a haze of 15% or less, or 14% or less, as measured according to ISO 13468 standard. As the dart drop impact strength is higher, the film is better, and therefore, the upper limit is not particularly limited. However, the dart drop impact strength may be, for example, 3000 gf or less. Also, as the haze is lower, the film is better, and therefore, the lower limit is not particularly limited. However, the haze may be, for example, 1% or more.

Hereinafter, preferred exemplary embodiments will be provided for better understanding of the present invention. However, the following exemplary embodiments are provided only for understanding the present invention more easily, but the content of the present invention is not limited thereby.

**Synthesis Example 1**

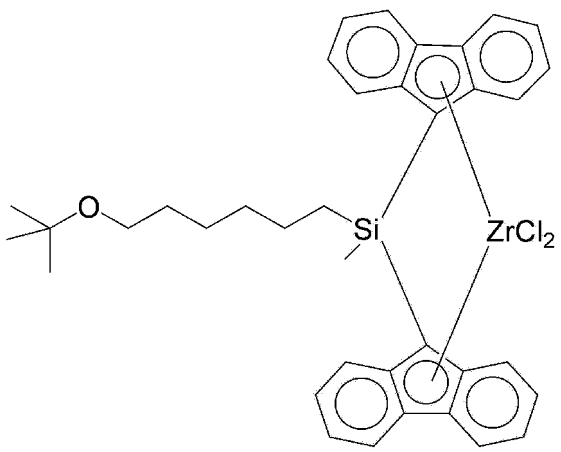

(A-1)

**Preparation of ligand compound**

To 100 mL of a trichloromethylsilane solution (about 0.21 mol, hexane), 100 mL of a t-butoxyhexyl magnesium chloride solution (about 0.14 mol, ether) was slowly added dropwise at -100°C over 3 hours, followed by stirring at room temperature for 3 hours. After separating a transparent organic layer from the mixed solution, the separated transparent organic layer was vacuum-dried to remove excess trichloromethylsilane. As a result, a transparent liquid (6-t-butoxyhexyl) dichloromethylsilane was obtained (yield of 84%).

1H NMR(500 MHz, CDCl3, 7.24 ppm): 0.76(3H, s), 1.11(2H, t), 1.18(9H,s), 1.32~1.55(8H, m), 3.33(2H, t)

Fluorene (100 mmol) and methyl tert-butyl ether (MTBE, 0.3 M) were put in a reactor at -20°C, and then n-BuLi (1.05 eq, 2.5 M in Hexane) was slowly added, and stirred at room temperature for 6 hours to prepare a fluorenyl lithium solution. After the stirring was finished, the temperature of the reactor was cooled to -30°C, and tert-Bu-O-$(CH_2)_6SiMeCl_2$ (0.505 eq) was added to the prepared fluorenyl lithium solution at -30°C, and washed with MTBE (50 mL). After stirring at room temperature for 8 hours or longer, the solution was extracted by adding water, and dried (evaporation) to obtain a (tert-Bu-O-$(CH_2)_6$)MeSi(9-$C_{13}H_{10})_2$ compound. The structure of the ligand was identified by 1H-NMR.

1H NMR (500MHz, CDCl3): -0.35 (3H, s), 0.25 (2H, m), 0.59 (2H, m), 0.95 (4H, m), 1.17 (9H, s), 1.31 (2H, m), 3.23 (2H, t), 4.11 (2H, s), 7.25 (4H, m), 7.37 (4H, m), 7.42 (4H, m), 7.86 (4H, d).

**Preparation of transition metal compound**

n-BuLi (2.05 eq, 2.5 M in Hexane) was slowly added to the (tert-Bu-O-$(CH_2)_6$)MeSi(9-$C_{13}H_{10})_2$ (100 mmol)/MTBE (0.4 M) solution at -20°C, and the solution was reacted for 8 hours or longer with elevating the temperature to room temperature to prepare a dilithium salt slurry solution. At -20°C, the prepared dilithium salt slurry solution was slowly added to a $ZrCl_4(THF)_2$ (1 eq, 100 mmol)/hexane (1 M) slurry solution, and further reacted for 8 hours at room temperature. The resulting reaction product was vacuum-dried to completely remove the solvent. DCM (0.43 M) was added to the resulting dry product, and then hexane (0.32 M) was further added. The resulting precipitate (LiCl) was filtered, and the filtrate was vacuum-dried. Hexane (0.3 M) was added to the resulting dry product to prepare a slurry, followed by filtration. The resulting filtrate was washed with hexane several times to obtain a red solid form of tert-Bu-O-$(CH_2)_6$)MeSi(9-$C_{13}H_9)_2ZrCl_2$ compound(A-1) (52.1 g, yield of 75.4%).

1H NMR(500MHz, C6D6) : 1.16(9H, s), 1.27 (3H, s), 1.59 (2H, m), 1.68 (4H, m), 1.93(4H, m), 3.33(2H, t), 6.90 (4H, m), 7.15 (4H, m), 7.60 (4H, dd), 7.65(2H, d), 7.78(2H, d)

**Synthesis Example 2**

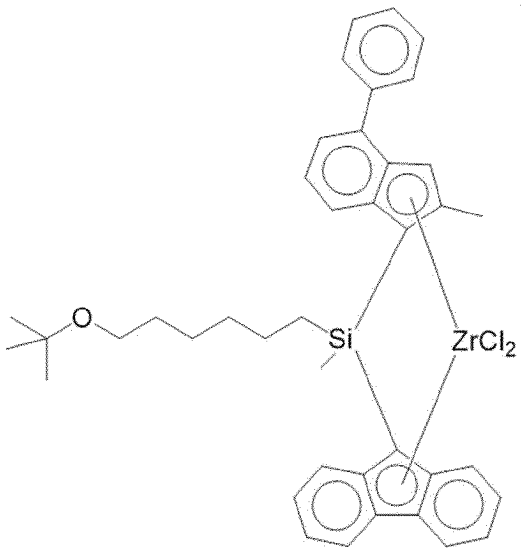

(A-2)

**Preparation of ligand compound**

Fluorene (100 mmol) and methyl tert-butyl ether (MTBE, 0.3 M) were put in a reactor at -20°C, and then n-BuLi (1.05 eq, 2.5 M in Hexane) was slowly added, and stirred at room temperature for 6 hours to prepare a fluorenyl lithium solution. After the stirring was finished, the temperature of the reactor was cooled to -30°C, and tert-Bu-O-$(CH_2)_6SiMeCl_2$ (1.0 eq) was added to the prepared fluorenyl lithium solution at -30°C, and washed with MTBE (50 mL), and then re-introduced. As a result, tert-Bu-O-$(CH_2)_6$SiMeCl(9-$C_{13}H_{10}$) was prepared.

In a separate reactor, 2-methyl-4-phenyl-indene (1.0 eq, 100 mmol) and MTBE (0.3 M) were put at -20°C, and n-BuLi (1.05 eq, 2.5 M in Hexane) was slowly added, and then stirred at room temperature for 6 hours to prepare lithiated 2-methyl-4-phenyl-indene.

The reactor containing the prepared tert-Bu-O-$(CH_2)_6$SiMeCl(9-$C_{13}H_{10}$) was cooled to - 30°C, and then the lithiated 2-methyl-4-phenyl-indene was introduced and reacted at room temperature for 8 hours or longer under stirring. The resulting product was extracted by adding water, and dried (evaporation) to obtain a ligand compound of (tert-Bu-O-$(CH_2)_6$)MeSi(9-$C_{13}H_{10}$)(2-Me-4-Ph-Indene). The structure of the ligand was identified by 1H-NMR.

1H NMR(500MHz, CDCl3) : -0.10 (3H, s), 0.58 (2H, m), 1.08 (2H, m), 1.23 (9H, s), 1.38 (4H, m), 1.62 (2H, m), 2.26 (3H, s), 3.28 (2H, t), 3.81 (1H, s), 4.11 (1H, s), 6.87(1H, s), 7.24 (3H, m), 7.36 (3H, m), 7.44 (4H, m), 7.53 (2H, t), 7.61 (2H, d), 7.86 (2H, d).

**Preparation of transition metal compound**

n-BuLi (2.05 eq, 2.5M in Hexane) was slowly added to the (tert-Bu-O-$(CH_2)_6$)MeSi(9-$C_{13}H_{10}$)(2-Me-4-Ph-Indene) (100 mmol)/MTBE (0.4 M) solution at -20°C, and the solution was reacted for 8 hours or longer with elevating the temperature to room temperature to prepare a dilithium salt slurry solution.

At -20°C, the prepared dilithium salt slurry solution was slowly added to a $ZrCl_4(THF)_2$ (1 eq, 100 mmol)/hexane (1 M) slurry solution, and further reacted for 8 hours at room temperature. The resulting reaction product was vacuum-dried to completely remove the solvent. DCM (0.43 M) was added to the resulting dry product, and then hexane (0.32 M) was further added. The resulting precipitate (LiCl) was filtered, and the filtrate was vacuum-dried. Hexane (0.3 M) was added to the resulting dry product to prepare a slurry, followed by filtration. The filtrate was washed with hexane several times to obtain a red solid form of (tert-Bu-O-$(CH_2)_6$)MeSi(9-$C_{13}H_9$)(2-Me-4-Ph-Indene)$ZrCl_2$ compound(A-2) (37.8 g, yield of 64.0%).

1H NMR(500MHz, C6D6) : 1.17(9H, s), 1.30 (3H, s), 1.57 (2H, m), 1.66 (4H, m), 1.86(4H, m), 2.26 (3H, s), 3.32(2H, t), 6.90 (2H, m), 6.95 (1H, s), 7.14 (3H, m), 7.36 (1H, d), 7.45 (3H, t), 7.61 (4H, m), 7.65(1H, d), 7.78(1H, d)

**Synthesis Example 3**

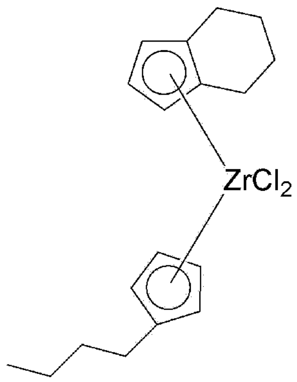

(B-1)

n-BuLi (1.05 eq) was slowly added at -25°C to a solution in which indene (1 eq) was dissolved in THF (0.3 M), and stirred at room temperature for 3 hours. TMSCl (($(CH_3)_3SiCl$) (1.05 eq) was added at -25°C to the resulting reaction product, followed by stirring at room temperature overnight. The resulting reaction product was dried to completely remove the solvent, and $ZrCl_4$ (1 eq) was added, toluene (0.5 M) was introduced, and stirred overnight at reflux. The resulting reaction product was cooled to room temperature, and then hexane (0.5 M) was introduced, and filtered to obtain an indene-$ZrCl_3$ solid.

In a separate reactor, n-BuLi (1.05 eq) was slowly added dropwise at -25°C to a solution in which n-butyl-cyclopentadiene (1 eq) was dissolved in THF (0.3 M), and then stirred at room temperature for 3 hours. The indene-ZrCb(1eq) prepared above was introduced to the resulting reaction product at -25°C, followed by stirring at room temperature overnight. The resulting reaction product was dried to completely remove the solvent, and then hexane was introduced, and solids were filtered to obtain an n-BuCp-$ZrCl_2$-Indene intermediate.

The obtained intermediate and Pd/C (Pd content =10wt%, based on the total weight of C, corresponding to 0.1 mol, based on 1 mol of the intermediate) were introduced into a parr reactor (600 ml) using DCM (0.3 M), and then 15 bar of hydrogen gas was introduced and reacted under stirring at 40°C overnight. After completion of the reaction, hydrogen gas remaining in the reactor was vented, and the final product and Pd/C in the parr reactor were filtered out using a cannula and washed with DCM. The filtrate was vacuum-dried, and hexane was added, followed by filtration, and a compound (B-1) of the above structure was obtained in a solid phase.

1H NMR(500MHz, CDCl3) : 1.11(3H, t), 1.50 (2H, m), 1.62 (2H, m), 1.70 (2H, m), 1.90 (2H, m), 2.53(2H, m), 2.78 (2H, t), 2.90(2H, m), 5.48 (2H, s), 5.93 (1H, s), 6.22 (2H, d), 6.35 (2H, d)

Synthesis Example 4

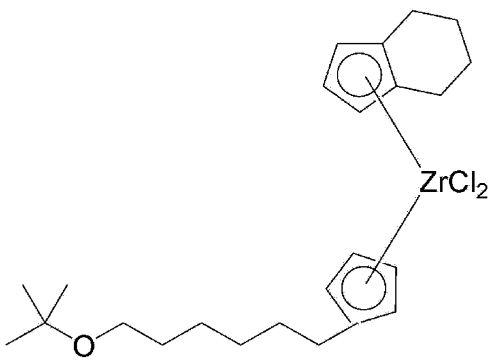

(B-2)

A compound (B-2) of the above structure was obtained in a solid phase in the same manner as in Synthesis Example 3, except that t-butoxyhexyl-cyclopentadiene was used instead of n-butyl-cyclopentadiene.

1H NMR(500MHz, CDCl3) : 1.23(9H, s), 1.40 (4H, m), 1.64 (6H, m), 1.88 (2H, m), 2.52(2H, m), 2.68 (2H, t), 2.91 (2H, m), 3.34(2H, t), 5.49 (2H, s), 5.94 (1H, s), 6.18 (2H, d), 6.28 (2H, d)

Synthesis Example 5

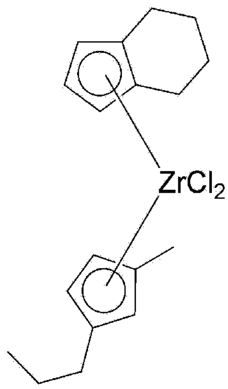

(B-3)

A compound (B-3) of the above structure was obtained in a solid phase in the same manner as in Synthesis Example 3, except that 1-methyl-3-propyl-1,3-cyclopentadiene was used instead of n-butyl-cyclopentadiene.

1H NMR(500MHz, CDCl3) : 0.93(3H, t), 1.350 (2H, m), 1.49 (2H, m), 1.63 (2H, m), 1.89 (2H, m), 2.22 (3H, s), 2.47 (1H, m), 2.55 (3H, m), 2.90 (2H, m), 5.48 (2H, s), 5.93 (2H, m), 5.98 (1H, m), 6.09 (1H, m)

Comparative Synthesis Example 1

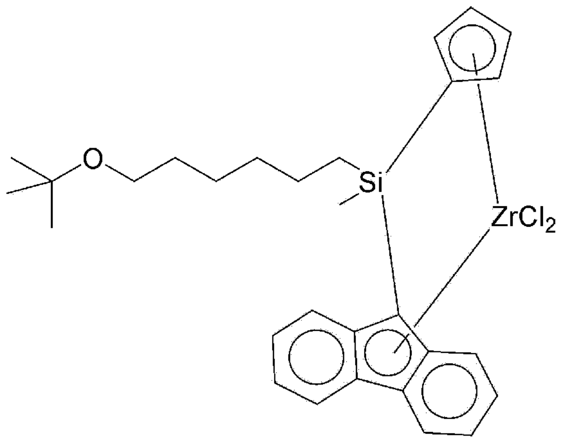

(C-1)

A transition metal compound (C-1) of the above structure was prepared in the same manner as in Preparation Example 2-6 in Korean Patent Publication No. 10-2016-0029718.

Comparative Synthesis Example 2

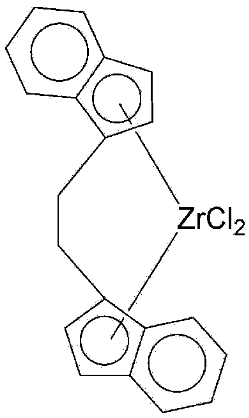

(C-2)

A 1,2-ethylene bis(indenyl)$ZrCl_2$ compound was synthesized as disclosed in J. AM. CHEM. SOC. VOL. 126, No. 46, 2004 pp. 15231-15244.

Comparative Synthesis Example 3

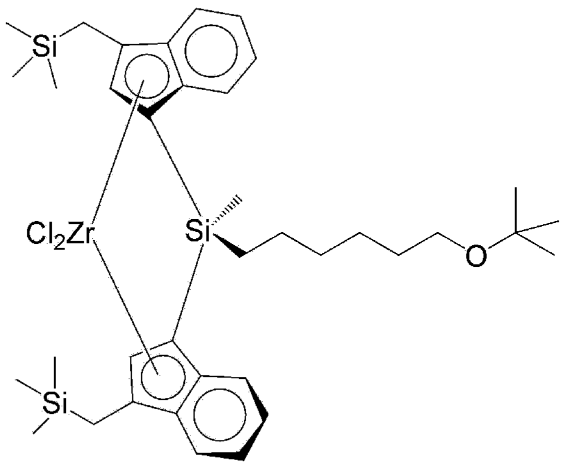

(D)

A transition metal compound (D) of the above structure was prepared in the same manner as in Preparation Example 2 in Korean Patent Publication No. 10-2016-0029718.

**Preparation Example 1**

2.0 kg of toluene and 700 g of silica (SYLOPOL 952X, manufactured by Grace Davision) were introduced into a 20 L sus autoclave, and stirred while raising the reactor temperature to 40°C. 5.4 kg of methylaluminoxane solution (10 wt% in toluene, manufactured by Albemarle) was introduced into the reactor, and the temperature was raised to 70°C, followed by stirring at about 200 rpm for about 12 hours.

Thereafter, the temperature of the reactor was lowered to 40°C, and stirring was stopped. The reaction product was allowed to settle for about 10 minutes, followed by decantation. 2.0 kg of toluene was added to the reaction product, and stirred for 10 minutes, the stirring was stopped, and then the solution was allowed to settle for about 30 minutes, followed by decantation.

To the reactor, 2.0 kg of toluene was introduced, and subsequently, the compound (A-1) (20 mmol) prepared in Synthesis Example 1 as the first transition metal compound and the compound (B-1) (40 mmol) prepared in Synthesis Example 3 as the second transition metal compound, and 1000 mL of toluene were introduced. The temperature of the reactor was raised to 85°C, followed by stirring for about 90 minutes. Then, the temperature of the reactor was lowered to room temperature, and the stirring was stopped, and the reaction product was allowed to settle for about 30 minutes, followed by decantation of the reaction product. Subsequently, 3 kg of hexane was introduced into the reactor, and the hexane slurry solution was transferred to a 20 L filter dryer to filter the solution, and dried under reduced pressure at 50°C

for about 4 hours to obtain 1.05 kg of a hybrid metallocene catalyst.

**Preparation Examples 2 to 4 and Comparative Preparation Examples 1 to 3**

Each hybrid metallocene catalyst was prepared in the same manner as in Preparation Example 1, except that the type and input amount of the first and second transition metal compounds were changed as shown in Table 1 below.

[Table 1]

| Catalyst | First transition metal compound | Second transition metal compound | Input amounts of first/second transition metal compounds (mmmol) |
|---|---|---|---|
| Preparation Example 1 | A-1 | B-1 | 20/40 |
| Preparation Example 2 | A-1 | B-2 | 20/40 |
| Preparation Example 3 | A-1 | B-3 | 20/40 |
| Preparation Example 4 | A-2 | B-1 | 35/40 |
| Comparative Preparation Example 1 | A-1 | C-1 | 20/40 |
| Comparative Preparation Example 2 | A-1 | C-2 | 20/40 |
| Comparative Preparation Example 3 | D | B-1 | 60/40 |

**<Preparation of polyolefin>**

**Examples 1 to 4 and Comparative Examples 1 to 3**

As a polymerization reactor, a 140 L continuous polymerization reactor operated at a reaction flow rate of about 7 m/s was prepared, in which an isobutene slurry loop process is possible. Further, in the reactor, reactants required for olefin polymerization as described in Table 2 were continuously introduced. As the catalyst used for each polymerization reaction, those prepared in Preparation Examples or Comparative Preparation Examples described in Table 1 were used, and the catalyst was introduced after mixing with isobutene slurry. The polymerization reaction was conducted at a pressure of about 40 bar and a temperature of about 85°C. In addition, other main conditions of the polymerization reaction were described in Table 2 below.

**Comparative Example 4**

BO1801EN (manufactured by DAELIM) was commercially purchased and used.

**Comparative Example 5**

XP8318MI, (manufactured by Exxon chemical) was commercially purchased and used.

**Comparative Example 6**

XP8656MI, (manufactured by Exxon chemical) was commercially purchased and used.

[Table 2]

| | Example | | | | Comparative Example | | |
|---|---|---|---|---|---|---|---|
| | 1 | 2 | 3 | 4 | 1 | 2 | 3 |
| Catalyst | Preparation Example 1 | Preparation Example 2 | Preparation Example 3 | Preparation Example 4 | Comparative Preparation Example 1 | Comparative Preparation Example 2 | Comparative Preparation Example 3 |
| Polymerization method | Slurry | Slurry | Slurry | Slurry | Slurry | Slurry | Slurry |

(continued)

| | Example | | | | Comparative Example | | |
|---|---|---|---|---|---|---|---|
| | 1 | 2 | 3 | 4 | 1 | 2 | 3 |
| Catalyst | Preparation Example 1 | Preparation Example 2 | Preparation Example 3 | Preparation Example 4 | Comparative Preparation Example 1 | Comparative Preparation Example 2 | Comparative Preparation Example 3 |
| Input amount of ethylene (kg/hr) | 20.0 | 20.0 | 20.1 | 22.1 | 20.8 | 22.8 | 19.9 |
| Input amount of 1-hexene[1] (wt%) | 11.1 | 14.1 | 13.5 | 12.2 | 12.6 | 11.0 | 14.4 |
| Input amount of hydrogen[2] (ppm) | 18 | 28 | 27 | 16 | 20 | 22 | 30 |
| Activity (kgPE/kgSiO2•hr) | 3.8 | 4.4 | 3.6 | 2.1 | 1.8 | 2.4 | 2.0 |

In Table 2,

The input amount (% by weight) of 1-hexene[1] is expressed as a percentage of the relative content, based on the total weight of olefin monomers including ethylene and 1-hexene, and

The input amount (ppm) of hydrogen[2] is based on the total weight of olefin monomers including ethylene and 1-hexene.

**Experimental Example 1**

**F(T) and a**

Differential scanning calorimetry (DSC) analysis was performed on the polyolefin of Example 1, and from the DSC analysis results, a difficulty of crystallization of the polyolefin (F(T)) and a ratio (a) of the Avrami parameter to the Ozawa parameter (Avrami parameter/Ozawa parameter) were calculated, respectively using the Mo method described in the literature (Li, Yu, et al. Journal of Applied Polymer Science 138.2 (2021): 49652). At this time, for comparison, DSC analysis was also performed in the same manner on commercially purchased polyolefin EP2010 (manufactured by LG Chem) and XP6056 (manufactured by Exxon Chemical), and F(T) and a were calculated, respectively (referred to as Reference Comparative Examples 1 and 2, respectively).

In detail, the polyolefin prepared in Example 1 and the polyolefins of Reference Comparative Examples were aliquoted in an amount of 5 mg each into an aluminum pan, introduced into a DSC device (DSC Q20/RCS90 (manufactured by TA)), and heated to 160°C at a rate of 10°C/min, and maintained for 5 minutes to remove thermal history.

The resulting polyolefin was cooled to 20°C at a cooling rate of 5°C/min, 10°C/min, 15°C/min and 20°C/min (N °C/min, where N=5, 10, 15 and 20) and maintained at 20°C for 5 minutes, then the cooled polyolefin was heated again to 160°C at a rate of 10°C/min, and the change in melting enthalpy was measured.

In the differential temperature curve obtained as a result of the DSC analysis, the crystallization peak between 30°C and 120°C was set as the analysis area, and the total enthalpy value of the corresponding area was regarded as 100% relative crystallinity, and the peak points corresponding to enthalpy values of 20%, 40%, 60%, 80% and 100%, based on the total enthalpy, were determined as 20% relative crystallinity, 40% relative crystallinity, 60% relative crystallinity, 80% relative crystallinity and 100% relative crystallinity, respectively. The time (min) taken to reach the temperature corresponding to each relative crystallinity of 20%, 40%, 60%, 80%, and 100% when cooled from 120°C at a cooling rate of N°C/min (where N=5, 10, 15, or 20) was calculated, respectively and determined as a crystallization completion time.

Specifically, in the differential temperature curve, the time ($t_{120}$) at the point corresponding to 120°C, and $t_{20}$_N,

$t_{40}$_N, $t_{60}$_N, $t_{80}$_N, or $t_{100}$_N (where N is 5, 10, 15, or 20, which a numerical value corresponding to the cooling rate), each the time taken to reach the relative crystallinity of 20%, 40%, 60%, 80%, or 100% when cooled at each cooling rate of 5°C/min, 10°C/min, 15°C/min and 20°C/min were calculated, respectively. The crystallization completion time (min) was calculated from the difference between the time ($t_{120}$) at the point corresponding to 120°C and the time taken to reach the relative crystallinity of 20%, 40%, 60%, 80%, or 100%. For example, the crystallization completion time of 20% relative crystallinity was calculated from the difference between the time ($t_{120}$) at the point corresponding to 120°C, and the time ($t_{20}$_N, N is the same as defined above) taken to reach the relative crystallinity of 20% when cooled at a cooling rate of 5°C/min, 10°C/min, 15°C/min and 20°C/min, i.e., the value of $t_{120\text{-}t20}$_N.

Log(t) data of the time taken to reach the relative crystallinity of 20%, 40%, 60%, 80% or 100% when cooled at a cooling rate of N°C/min (wherein N=5, 10, 15 or 20), specifically, data corresponding to log($t_x$_5), log($t_x$_10), log($t_x$_15), log($t_x$_20) (wherein x is the relative crystallinity (%) value, x=20, 40, 60, 80, or 100) and log(Φ) data (Φ is the cooling rate (°C/min) value, Φ=5, 10, 15, and 20) were plotted. In the plotting, the crystallization completion time, e.g., the time (log t) taken to reach 20% relative crystallinity was plotted on the X-axis, and the cooling rate (log Φ) was plotted on the Y-axis.

The plotted graph was curve-fitted to a first-order linear relationship using a data analysis software (Origin Pro, 9.1), and in the resulting first-order linear relationship, the y-intercept and the slope were determined as F(T) and a, respectively.

Further, the following Equation 1 in the Mo method was derived by using the y-intercept as log F(T) and the absolute value of the slope as a in the first-order linear relationship.

[Equation 1]

$$\log \Phi = \log F(T) - a \log t$$

in Equation 1,

Φ represents the cooling rate, F(T) represents difficulty of crystallization, a represents a ratio of Avrami parameter to Ozawa parameter (Avrami parameter/Ozawa parameter), and t represents the crystallization completion time (min), specifically, the time taken to reach 20%, 40%, 60%, 80%, or 100% relative crystallinity.

Based on the fitting equation, a value and logF(T) value corresponding to each relative crystallinity (20%, 40%, 60%, 80%, 100%) were calculated, and the results are shown in Tables 3 to 5.

Tables 3 to 5 are the results for the polyolefins of Example 1 and Reference Comparative Examples 1 and 2, respectively. In Tables 3 to 5, $C_i$ represents the crystallization rate (min/°C) confirmed by the value of 1000/F(T), and $\overline{C_i}$ represents the average of the $C_i$ values at each relative crystallinity.

[Table 3]

| Relative crystallinity (%) | F(T) | a | $\overline{C}_i$ (min/°C) | $\overline{C}_i$ |
|---|---|---|---|---|
| 20 | 13.46 | 1.48 | 74.30 | 39.70 |
| 40 | 17.08 | 1.34 | 58.22 | |
| 60 | 29.56 | 1.07 | 33.83 | |
| 80 | 47.50 | 1.03 | 21.05 | |
| 100 | 90.20 | 1.00 | 11.09 | |

[Table 4]

| Relative crystallinity (%) | F(T) | A | $\overline{C}_i$ (min/°C) | $\overline{C}_i$ |
|---|---|---|---|---|
| 20 | 22.43 | 1.22 | 44.59 | 29.47 |
| 40 | 25.58 | 1.14 | 39.10 | |
| 60 | 31.68 | 1.06 | 31.57 | |
| 80 | 47.55 | 1.02 | 21.03 | |
| 100 | 90.29 | 1.00 | 11.08 | |

[Table 5]

| Relative crystallinity (%) | F(T) | a | $\overline{C}_i$ (min/°C) | $\overline{C}_i$ |
|---|---|---|---|---|
| 20 | 24.00 | 1.19 | 41.66 | 27.41 |
| 40 | 28.23 | 1.15 | 35.43 | |
| 60 | 34.61 | 1.08 | 28.89 | |
| 80 | 50.05 | 1.03 | 19.98 | |
| 100 | 90.18 | 1.00 | 11.09 | |

Generally, the area corresponding to 20% relative crystallinity is the area where crystals begin to form and is the point where the largest heat change occurs, and is sensitive to cooling rate conditions. Accordingly, in extrusion processes that require cooling with low-temperature external air, such as the blown film process, the area corresponding to 20% relative crystallinity is very important. As confirmed from the results of Tables 3 to 5, the area with the greatest variation in the F(T) and a values depending on the type of polyolefin is the area corresponding to the 20% relative crystallinity.

As shown in Table 3, since the polyolefin of Example 1 has a relatively low F(T) value, crystallization easily occurs. However, since a value is high, the change in crystallization characteristics due to the changes in the cooling rate is not significant. In contrast, as shown in Tables 4 and 5, since the polyolefins of Reference Comparative Examples 1 and 2 have high F(T) values, crystallization itself is difficult to occur. However, since a values are low, crystallization characteristics may more easily change according to the changes in the cooling rate. In other words, when the cooling rate is slowed during film processing, the polyolefins of Reference Comparative Examples 1 and 2 take a long time to reach a specific relative crystallinity, for example, 20% relative crystallinity, and therefore, there is a high possibility that crystal growth is relatively suppressed. However, when the cooling rate is sufficiently fast, the time to reach the crystallinity varies more dramatically due to the low a value, as compared to the polyolefin of Example 1, which has the high a value, and thus there is a possibility that the crystallization completion time becomes similar to or even faster than that of the polyolefin of Example 1.

**Experimental Example 2**

The physical properties of the polyolefins prepared in Examples and Comparative Examples were measured as follows, and the results are shown in Tables 6 and 7, respectively.

(1) Melt Index ($MI_{2.16}$): measured according to the ASTM D1238 (Condition E, 190 °C, 2.16 kg load) standard.

(2) Melt Index ($MI_{21.6}$): measured according to the ASTM D1238 (Condition E, 190 °C, 21.6 kg load) standard.

(3) MFRR ($MI_{21.6}/MI_{2.16}$): a ratio obtained by dividing $MI_{21.6}$ (ASTM D1238, 190 °C, 21.6 kg load) by $MI_{2.16}$ (ASTM D1238, 190 °C, 2.16 kg load).

(4) Density: measured according to the ASTM D1505 standard.

(5) Molecular weight distribution

Gel permeation chromatography (GPC, manufactured by Waters) was used to measure a weight average molecular weight (Mw) and a number average molecular weight (Mn), respectively, and a molecular weight distribution (Mw/Mn) was calculated from the measured values.

In detail, the measurement samples were evaluated using Polymer Laboratories PLgel MIX-B 300 mm length column and Waters PL-GPC220 device. The measurement temperature was 160°C, 1,2,4-trichlorobenzene was used as a solvent, and the flow rate was 1 mL/min. The samples were prepared at a concentration of 10 mg/10 mL, and then provided in an amount of 200 μL. Mw and Mn values were determined using a calibration curve formed using polystyrene standards. 9 kinds of polystyrene standard specimens each having a molecular weight (g/mol) of 2,000 / 10,000 / 30,000 / 70,000 / 200,000 / 700,000 / 2,000,000 / 4,000,000 / 10,000,000 were used.

(6) CFC analysis

A cross fraction chromatography (CFC) analysis was performed on the polyolefins prepared in Examples and Comparative Examples by the following method, and from the results, $A_H/A_1$ was calculated.

[Cross fraction chromatography analysis conditions (including TREF and GPC analysis)]

- Analysis equipment: Polymer Char CFC - 7890B (G3440D)
  (Detector: Integrated Detector IR5 MCT)
- Sample preparation and injection: 32 mg of the polyolefin prepared in Examples or Comparative Examples was put into a 10 mL vial and placed in an autosampler, 8 mL of 1,2,4-trichlorobenzene (TCB) was introduced, and dissolved at 160°C for 90 minutes, and stabilized at 140°C for 20 minutes. After nitrogen purging, the sample was extracted and loaded onto a temperature rising elution fractionation column (TREF column).
- Crystallization: the temperature of the sample previously loaded in the TREF column was set at 140°C, and cooled from 140°C to 35°C at a rate of 0.5 °C/min and maintained for 15 minutes.

The detailed conditions for stabilization and crystallization are as follows:

| Heating / Cooling rate | |
|---|---|
| Stabilization rate | 40 C°/min |
| Stabilization temperature | 140 °C |
| Stabilization time | 20 min |
| Crystallization cooling rate | 0.5 °C/min |
| Crystallization temperature | 35 °C |
| Crystallization time | 15 min |

- Temperature rising elution fractionation (TREF) analysis: The sample previously crystallized was heated from 35°C to 120°C at a rate of 1°C/min to the fraction temperature below, then fixed, and the concentrations of the fractions eluted at that temperature for 5 minutes were measured. The TREF curve was derived from the results of measuring the concentrations.

From the TREF curve, a content ratio (<35°C) of a soluble fraction (SF) eluted in a region of an elution temperature of lower than 35°C, a content ratio (35°C to 55°C) of a fraction eluted in a region of an elution temperature of 35°C or higher and lower than 55°C, a content ratio (55°C to 75°C) of a fraction eluted in a region of an elution temperature of 55°C or higher and 75°C or lower, and a content ratio (>75°C) of a fraction eluted in a region of an elution temperature of higher than 75°C were calculated (wt%), respectively, based on the total weight of all eluted fractions.

Further, from the TREF curve, a content ratio ($W_L$) of a low crystalline polymer which is eluted in a region of an elution temperature of 75°C or lower, specifically, in a region of an elution temperature of 35°C to 75°C, excluding SF, and a content ratio ($W_H$) of a highly crystalline polymer which is eluted in a region of an elution temperature of higher than 75°C were calculated (wt%), respectively, based on the total weight of all eluted fractions.

Further, the elution temperature ($Te_L$) of the lowest peak and the elution temperature ($Te_H$) of the highest peak in the TREF curve were identified.

Further, the peak height of the highest peak in the TREF curve was determined as $A_H$, and when the lowest peak in the TREF curve exists at an elution temperature of 40°C to 75°C, the peak height of the lowest peak was determined as $A_1$, however, when the lowest peak exists outside of the elution temperature range of 40°C to 75°C, or when the TREF curve has a single peak, the height at the elution temperature of 65°C was determined as $A_1$ to obtain each value, and then $A_H/A_1$ was calculated.

<Fraction temperature>

35°C/40°C/43°C/46°C/49°C/52°C/55°C/58°C/61°C/64°C/67°C/70°C/73°C/76°C/79°C/82°C/85°C/88°C/91°C/94°C/97°C/100°C/105°C/120°C

<Measurement conditions>

| Fraction elution condition | |
|---|---|
| Elution time | 5 min |
| Analysis time | 15 min |
| Temperature rate (Heating) | 20 °C/min |
| Redissolution time | 5 min |
| **Cleaning condition** | |
| Temperature heating rate | 20 °C/min |
| Cleaning temperature | 150 °C |
| Cleaning time | 30 min |
| **Solvent control condition** | |
| Analysis pump rate | 1 mL/min |
| Cleaning TREF column Flow rate | 1 mL/min |
| Pump stabilization time | 30 min |
| Sample pick up flow rate | 3 mL/min |
| Sample pick up volume | 2.6 mL/min |
| Load loop flow rate | 1.25 mL/min |
| Load loop flow volume | 1.6 mL |
| Clean line flow rate | 4 mL/min |
| Clean line volume | 5 mL |
| Clean filter flow rate | 4 mL/min |
| Clean filter volume | 10 mL |
| Clean transfer line flow rate | 5 mL/min |
| Clean transfer line volume | 2.5 mL |
| Load TREF column flow rate | 0.2 mL/min |
| Load TREF at X mL from beginning | 1.0 mL |
| Solvent pick up flow rate | 15 mL/min |
| Vial filling flow rate | 5 mL/min |
| Delay volume | 9 mL |
| Acquisition volume | 18 mL |

- GPC analysis: the fractions eluted at each temperature in the previous TREF analysis were transferred to a GPC column of a GPC device which was provided in the CFC device, and then the molecular weights of the eluted molecules were measured according to the following measurement conditions.

Further, from the measurement results, a weight average molecular weight ($M_L$) of the low-crystalline polymer eluted in the region of 75°C or lower, i.e., in the region of the elution temperature of 35°C to 75°C, excluding the soluble fraction (SF), in the TREF curve, and a weight average molecular weight ($M_H$) of the highly crystalline polymer eluted in the region of the elution temperature of higher than 75 °C were calculated, respectively.

<Measurement conditions>

| GPC related condition | |
|---|---|
| CFC load column rate | 0.2 mL/min |
| CFC sample loaded x mL from col start | 1 mL |
| CFC solvent pick up rate | 15 mL/min |
| CFC vial filling rate | 8 mL/min |
| CFC pump stabilization time | 30 min |
| CFC elution time | 5 min |
| CFC delay volume | 0 |
| CFC acquisition volume | 40 mL |
| CFC analysis pump flow | 1 mL/min |
| CFC pick up sample rate | 3 mL/min |
| CFC pick up sample volume | 2.6 mL |
| CFC load loop rate | 1.25 mL/min |
| CFC load loop volume | 1.6 mL |
| CFC clean line rate | 5 mL/min |
| CFC clean line volume | 2 mL |
| CFC clean filter rate | 5 mL/min |
| CFC clean filter volume | 5 mL |
| CFC clean Tr line rate | 5 mL/min |
| CFC clean Tr line volume | 2 mL/min |

**(7) F(T) and a**

DSC analysis was performed on the polyolefins of Examples and Comparative Examples in the same manner as in Experimental Example 1, and from the DSC analysis results, F(T) and a were calculated, respectively using the Mo method described in the literature (Li, Yu, et al. Journal of Applied Polymer Science 138.2 (2021): 49652).

Specifically, the polyolefins prepared in Examples 1 to 4, and Comparative Example 1 were aliquoted in an amount of 5 mg each into an aluminum pan, introduced into a DSC device (DSC Q20/RCS90 (manufactured by TA)), and heated to 160°C at a rate of 10°C/min, and maintained for 5 minutes to remove thermal history.

The resulting polyolefin was cooled to 20°C at a cooling rate of 5°C/min, 10°C/min, 15°C/min and 20°C/min (N °C/min, where N=5, 10, 15 and 20) and maintained at 20°C for 5 minutes, then the cooled polyolefin was heated again to 160°C at a rate of 10°C/min, and the change in melting enthalpy was measured.

In the differential temperature curve obtained as a result of the DSC analysis, the crystallization peak between 30°C and 120°C was set as the analysis area, and the total enthalpy value of the corresponding area was regarded as 100% relative crystallinity, and the peak point corresponding to the enthalpy value of 20%, based on the total enthalpy, was determined as 20% relative crystallinity. The time (min) taken to reach the temperature corresponding to 20% relative crystallinity when cooled from 120°C at a cooling rate of N°C/min (wherein N=5, 10, 15, or 20) was calculated, and determined as a crystallization completion time.

Specifically, in the differential temperature curve, the time ($t_{120}$) at the point corresponding to 120°C, and the time ($t_{20_}N$, wherein N=5, 10, 15 or 20) taken to reach 20% relative crystallinity when cooled at each cooling rate of 5°C/min, 10°C/min, 15°C/min and 20°C/min were calculated, respectively. The crystallization completion time (min) was calculated from the difference between the time ($t_{120}$) at the point corresponding to 120°C and the time ($t_{20_}N$) taken to reach the 20% relative crystallinity, i.e., $t_{120}$-$t_{20_}N$ value.

Log(t) data of the time taken to reach 20% relative crystallinity when cooled at a cooling rate of N°C/min (wherein N=5, 10, 15 or 20), and log(Φ) data (Φ is the cooling rate (°C/min) value, Φ=5, 10, 15, and 20) were plotted. In the plotting, the crystallization completion time, e.g., the time (log t) taken to reach 20% relative crystallinity was plotted on the X-axis, and the cooling rate (log Φ) was plotted on the Y-axis. FIG. 1 is a graph showing the relationship between the time taken to reach 20% relative crystallinity, i.e., the crystallization completion time, and the cooling rate in the differential scanning calorimeter (DSC) analysis of the polyolefins of Examples 1 to 4 and Comparative Example 1.

The plotted graph was curve-fitted to a first-order linear relationship using a data analysis software (Origin Pro, 9.1), and in the resulting first-order linear relationship, the y-intercept and the slope were determined as F(T) and a, respectively.

[Table 6]

| | | Example 1 | Example 2 | Example 3 | Example 4 |
|---|---|---|---|---|---|
| $MI_{2.16}$ (g/10 min) | | 1.0 | 1.0 | 0.95 | 1.04 |
| $MI_{21.6}$ (g/10 min) | | 27.62 | 26.22 | 27.26 | 30.7 |
| MFRR | | 27.62 | 26.22 | 28.69 | 29.5 |
| Density (g/cc) | | 0.9189 | 0.9186 | 0.9190 | 0.9187 |
| MWD | | 2.87 | 3.15 | 3.77 | 3.43 |
| CFC analysis | $Te_L$(°C) | 66.1 | 64.8 | 84 | 82.9 |
| | $Te_H$(°C) | 89.4 | 89.4 | 90.4 | 91.0 |
| | SF (<35°C) (wt%) | 4.3 | 4.6 | 9.5 | 11.2 |
| | 35°C or higher to lower than 55°C (wt%) | 6.9 | 7.1 | 10 | 8.0 |
| | 55°C or higher to 75°C or lower (wt%) | 34.6 | 32.6 | 29.2 | 26.1 |
| | >75°C ($W_H$, wt%) | 54.2 | 55.7 | 51.4 | 54.7 |
| | $W_L$ (wt%) | 41.6 | 39.7 | 39.2 | 33.2 |
| | $M_L$ (g/mol) | 170,852 | 209,812 | 139,653 | 133,175 |
| | $M_H$ (g/mol) | 70,600 | 92,987 | 108,509 | 80,314 |
| $A_H/A_1$ | | 1.81 | 2.58 | 2.47 | 2.67 |
| F(T) 20 | | 13.52 | 13.46 | 13.21 | 14.3 |
| a_20 | | 1.49 | 1.48 | 1.55 | 1.49 |

[Table 7]

| | Comparative Example 1 | Comparative Example 2 | Comparative Example 3 | Comparative Example 4 | Comparative Example 5 | Comparative Example 6 |
|---|---|---|---|---|---|---|
| $MI_{2.16}$ (g/10 min) | 0.56 | 1.1 | 0.83 | 1.0 | 1.0 | 0.5 |
| $MI_{21.6}$ (g/10 min) | 30.0 | 30.3 | 18.5 | 26.0 | 28.1 | 16.5 |
| MFRR | 53.53 | 27.5 | 22.3 | 26.0 | 28.1 | 32.9 |
| Density (g/cc) | 0.9179 | 0.9201 | 0.9163 | 0.9190 | 0.9189 | 0.9161 |
| MWD | 11.07 | 3.15 | 2.45 | 3.71 | 3.26 | 3.46 |

(continued)

| | | Comparative Example 1 | Comparative Example 2 | Comparative Example 3 | Comparative Example 4 | Comparative Example 5 | Comparative Example 6 |
|---|---|---|---|---|---|---|---|
| CFC analysis | $Te_L$(°C) | | 68.1 | | 66.5 | 61 | 62.6 |
| | $Te_H$(°C) | 78.2 | 88.8 | 74.2 | 89.8 | 88.4 | 88.5 |
| | SF (<35°C) (wt%) | 14.4 | 0.7 | 1.0 | 3 | 3.1 | 6.8 |
| | 35°C or higher to lower than 55°C (wt%) | 10.3 | 3.0 | 2.7 | 5.8 | 7.4 | 9.1 |
| | 55°C or higher to 75°C or lower (wt%) | 38.1 | 40.8 | 43.3 | 41.6 | 36.8 | 33.1 |
| | >75°C ($W_H$, wt%) | 37.2 | 55.5 | 53 | 49.6 | 52.7 | 51 |
| | $M_L$ (g/mol) | 169,153 | 133,022 | 133,711 | 223,222 | 225,162 | 273,535 |
| | $M_H$ (g/mol) | 97,970 | 95,905 | 113,110 | 81,501 | 70,453 | 73,096 |
| $A_H/A_1$ | | 1.4 | 1.9 | 1.87 | 1.35 | 2.11 | 2.46 |
| F(T)_20 | | 17.76 | 15.82 | 22.08 | 15.97 | 15.20 | 15.16 |
| a_20 | | 1.30 | 1.31 | 1.26 | 1.42 | 1.40 | 1.45 |

As a result of the experiment, the polyolefins of Examples 1 to 4 showed the low F(T) value and the high a value, as compared to those of Comparative Examples 1 to 6. From these results, it is expected that the polyolefins of Examples 1 to 4 did not significantly change in the crystallization rate even under blown film processing conditions, and their relatively small size may form a crystal structure that causes low surface haze, resulting in excellent transparency.

In contrast, Comparative Example 1 showed the high F(T) due to lack of the fraction content in the highly crystalline region, and Comparative Example 2 had the reduced drop impact strength due to the low $M_L$.

**Experimental Example 3**

Films were produced using each of the polyolefins prepared in Examples and Comparative Examples, and then dart drop impact strength and haze properties were evaluated. The results are shown in Table 8 below.

(1) Production of film

Based on the total weight of the polyolefin prepared in Examples or Comparative Examples, 1500 ppm of antioxidant (a weight ratio of Songnox 1076 (Songwon): Songnox 1680 (Songwon) = 1:2) and 300 ppm of 3M Dynamar Polymer Processing Additive FX5929 were added and mixed, and then extruded using a twin-screw extruder (TEK 30 MHS, manufactured by SMPLATECH CO., diameter of 32 pi, L/D=40) at an extrusion temperature of 190°C and an extrusion rate of 35 kg/hr to prepare approximately 18 mg of a pellet-like composition for producing a film.

The composition for producing a film prepared as above was extruded under the following film extrusion conditions to produce a film.

<Film extrusion conditions>

Single Screw Extruder (YOOJIN ENGINEERING, Blown Film M/C, 50 pi)
Melt temperature (or extrusion temperature): 170°C
Die Gap: 2.0 mm
Die diameter: 120 mm
Blown-Up Ratio: 2.5
Frost Line Height: maintained at 250 mm to 260 mm
Sample extrusion amount: 300 g/min to 500 g/min
Film thickness: 50 μm

**(2) Dart drop impact strength**

For the 50 μm-thick film produced as above, the dart drop impact strength was measured according to ASTM D1709 [Method A] standard, which was repeated 20 or more times for each film sample, and then the average value was taken.

**(3) HAZE**

For the 50 μm-thick film produced as above, the haze of the film was measured according to ISO 13468 standard.

[Table 8]

| | Dart drop impact (gf) | Haze (%) |
|---|---|---|
| Example 1 | >1900 | 13.5 |
| Example 2 | >1900 | 13.4 |
| Example 3 | >1900 | 12.4 |
| Example 4 | 1800 | 13.8 |
| Comparative Example 1 | 1901 | 25.4 |
| Comparative Example 2 | 1079 | 8.5 |
| Comparative Example 3 | 1450 | 6.3 |
| Comparative Example 4 | >1900 | 20.0 |
| Comparative Example 5 | >1900 | 27.8 |
| Comparative Example 6 | >1900 | 24.7 |

**Claims**

**1.** A polyolefin,

wherein a molecular weight distribution is 2.5 to 4,
difficulty of crystallization (F(T)) and a ratio (a) of Avrami parameter to Ozawa parameter, calculated according to the Mo method after differential scanning calorimetry, satisfy the following requirements of (i) and (ii) under the condition of 20% relative crystallinity, and
a peak height ratio of $A_H/A_1$ satisfies the following requirement of (iii) in a temperature rising elution fractionation curve by cross fraction chromatography analysis:

(i)

$$F(T) \leq 15$$

(ii)

$$a > 1.45$$

(iii)

$$A_H/A_1 \geq 1.8$$

in (iii),
$A_H$ represents a peak height of a highest peak in the temperature rising elution fractionation curve, and
$A_1$ represents a peak height of a lowest peak when the lowest peak in the temperature rising elution fractionation curve exists at an elution temperature of 40°C to 75°C, and represents a height at an elution temperature of 65°C when the lowest peak in the temperature rising elution fractionation curve does not exist at an elution temperature of 40°C to 75°C, or when the lowest peak does not exist because the temperature rising elution fractionation curve has a single peak.

**2.** The polyolefin of claim 1, wherein F(T) and a are obtained by a method including:

the step of differential scanning calorimetry analysis, wherein the polyolefin is introduced into a differential scanning calorimeter, cooled to 20°C at a cooling rate of N°C/min (where N=5, 10, 15, and 20), and maintained at 20°C for 5 minutes, and then the cooled polyolefin is heated again to 160°C at a rate of 10°C/min to measure changes in the melting enthalpy;
the step of calculating a crystallization completion time, which is the time taken to reach the temperature corresponding to 20% relative crystallinity when cooled from 120°C at a cooling rate of N°C/min (where N=5, 10, 15, or 20), wherein 20% relative crystallinity is determined by the point where the enthalpy value is 20%, when the crystallization peaks between 30°C and 120°C in the differential temperature curve obtained as a result of the differential scanning calorimetry analysis are set as the analysis area, and the total enthalpy value of the corresponding area is regarded as 100% relative crystallinity;
the step of obtaining a first-order linear relationship by plotting the crystallization completion time (log t) calculated above on the X-axis and the cooling rate (log $\Phi$) on the Y axis, and then curve fitting; and
the step of determining the y-intercept and the slope in the resulting first-order linear relationship as F(T) and a, respectively.

**3.** The polyolefin of claim 1, wherein F(T) is 10 to 15, and a is 1.46 to 1.6.

**4.** The polyolefin of claim 1, wherein $A_H/A_1$ is 1.8 to 3.

**5.** The polyolefin of claim 1, wherein $M_L$ is 130,000 g/mol or more, which is a weight average molecular weight of a polymer eluted in a region of an elution temperature of 35°C to 75°C in the temperature rising elution fractionation curve by the cross fraction chromatography analysis, and a content ratio $W_L$ is 35% by weight to 45% by weight or more, based on the total weight of all eluted fractions, and
$M_H$ is 70,000 g/mol to 110,000 g/mol, which is a weight average molecular weight of a polymer eluted in a region of an elution temperature of higher than 75°C, and a content ratio $W_H$ is 50% by weight to 60% by weight, based on the total weight of all eluted fractions.

**6.** The polyolefin of claim 1, wherein $Te_L$ is 60°C to 90°C, which is an elution temperature of a lowest peak, and $Te_H$ is 80°C to 100°C, which is an elution temperature of a highest peak, in the temperature rising elution fractionation curve by the cross fraction chromatography analysis.

**7.** The polyolefin of claim 1, wherein the polyolefin has a density of 0.915 g/cc to 0.925 g/cc, as measured according to ASTM D1505.

**8.** The polyolefin of claim 1, wherein the polyolefin has $MI_{2.16}$ of 0.5 g/10 min to 1.5 g/10 min, which is a melt index measured according to ASTM D 1238 at a temperature of 190°C under a load of 2.16 kg, and $MI_{21.6}$ of 10 g/10 min to 50 g/10 min, which is a melt index measured at a temperature of 190°C under a load of 21.6 kg.

**9.** The polyolefin of claim 1, wherein the polyolefin has MFRR of 20 to 30, which is a ratio obtained by dividing a melt index

($MI_{21.6}$) measured according to ASTM D1238 standard at a temperature of 190°C under a load of 21.6 kg by a melt index ($MI_{2.16}$) measured at a temperature of 190°C under a load of 2.16 kg.

**10.** The polyolefin of claim 1, wherein the polyolefin is a copolymer of ethylene/1-hexene.

**11.** A film comprising the polyolefin of claim 1.

**12.** The film of claim 11, wherein the film has a dart drop impact strength of 1600 gf or more, as measured according to the Method A of ASTM D 1709 under conditions of BUR of 2.3 to 3 and a film thickness of 50 μm to 65 μm, and has a haze of 15% or less, as measured according to ISO 13468 standard.

**13.** The film of claim 11, wherein the film is a blown film.

【FIG. 1】

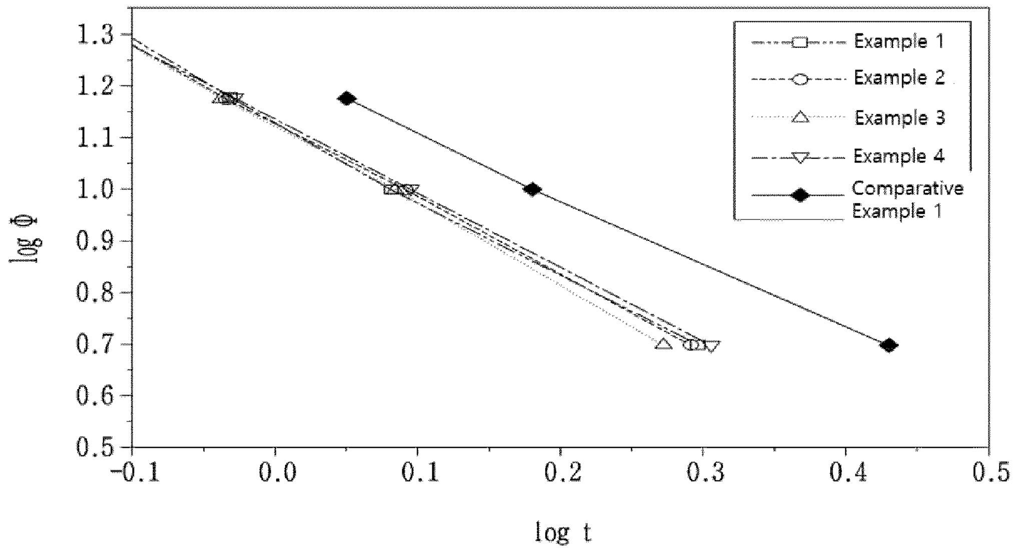
1.3
1.2
1.1
1.0
0.9
0.8
0.7
0.6
0.5
log Φ
-0.1
0.0
0.1
0.2
0.3
0.4
0.5
log t
Example 1
Example 2
Example 3
Example 4
Comparative Example 1

【FIG. 2】

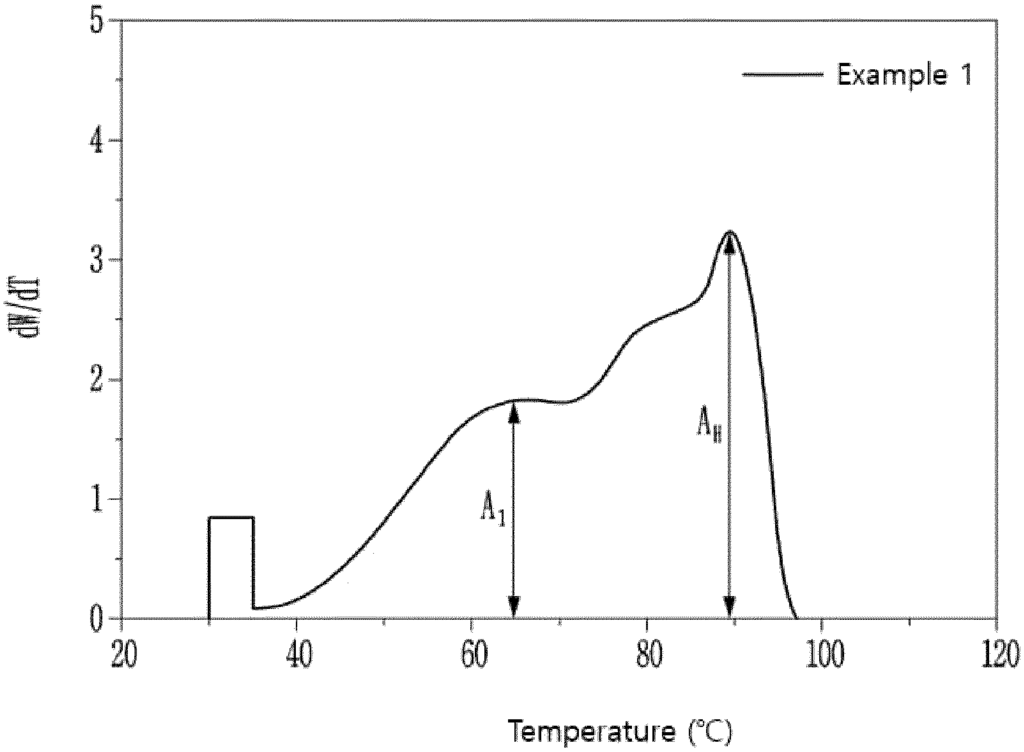
5
4
3
2
1
0
dW/dT
20
40
60
80
100
120
Temperature (℃)
Example 1
$A_1$
$A_H$

【FIG. 3】

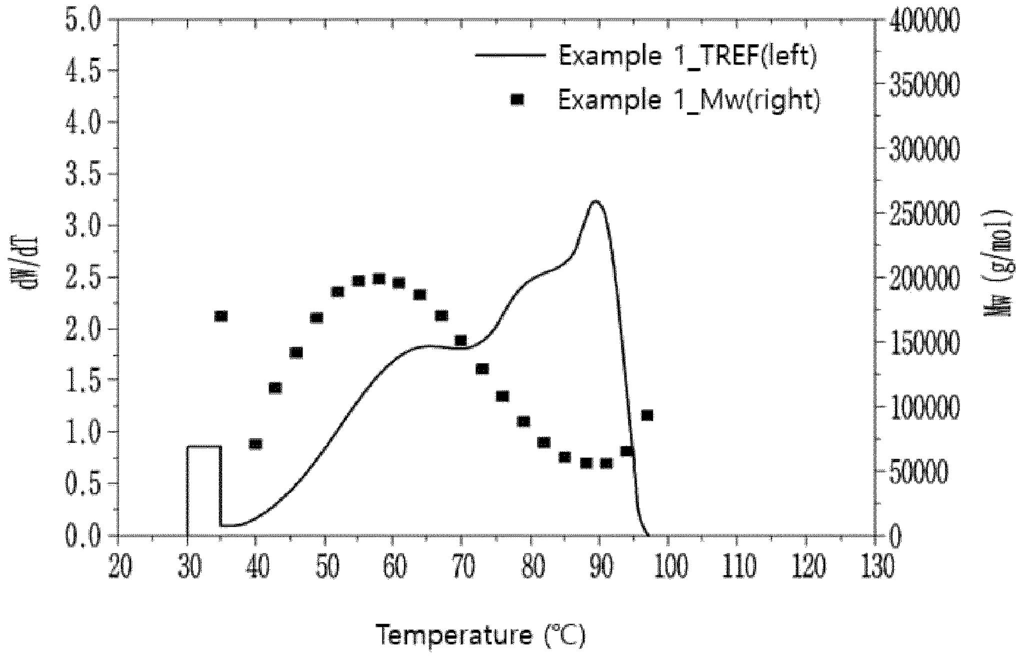
Example 1_TREF(left)
Example 1_Mw(right)
dW/dT
Mw (g/mol)
Temperature (℃)
5.0
4.5
4.0
3.5
3.0
2.5
2.0
1.5
1.0
0.5
0.0
400000
350000
300000
250000
200000
150000
100000
50000
0
20 30 40 50 60 70 80 90 100 110 120 130

【FIG. 4】

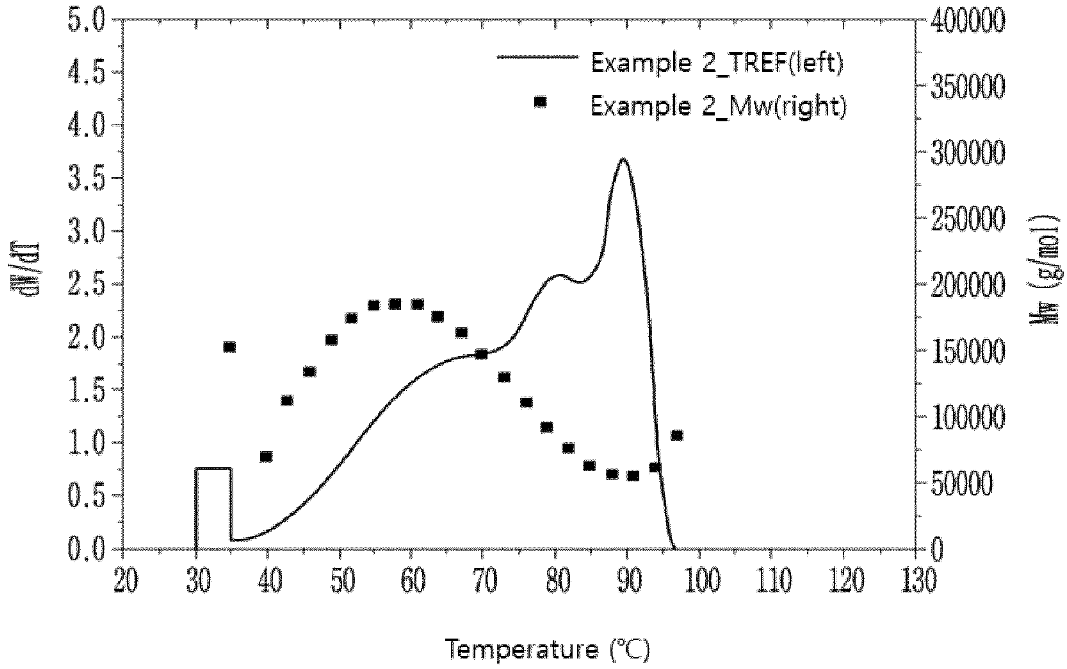
Example 2_TREF(left)
Example 2_Mw(right)
dW/dT
Mw (g/mol)
Temperature (℃)
5.0
4.5
4.0
3.5
3.0
2.5
2.0
1.5
1.0
0.5
0.0
400000
350000
300000
250000
200000
150000
100000
50000
0
20 30 40 50 60 70 80 90 100 110 120 130

【FIG. 5】

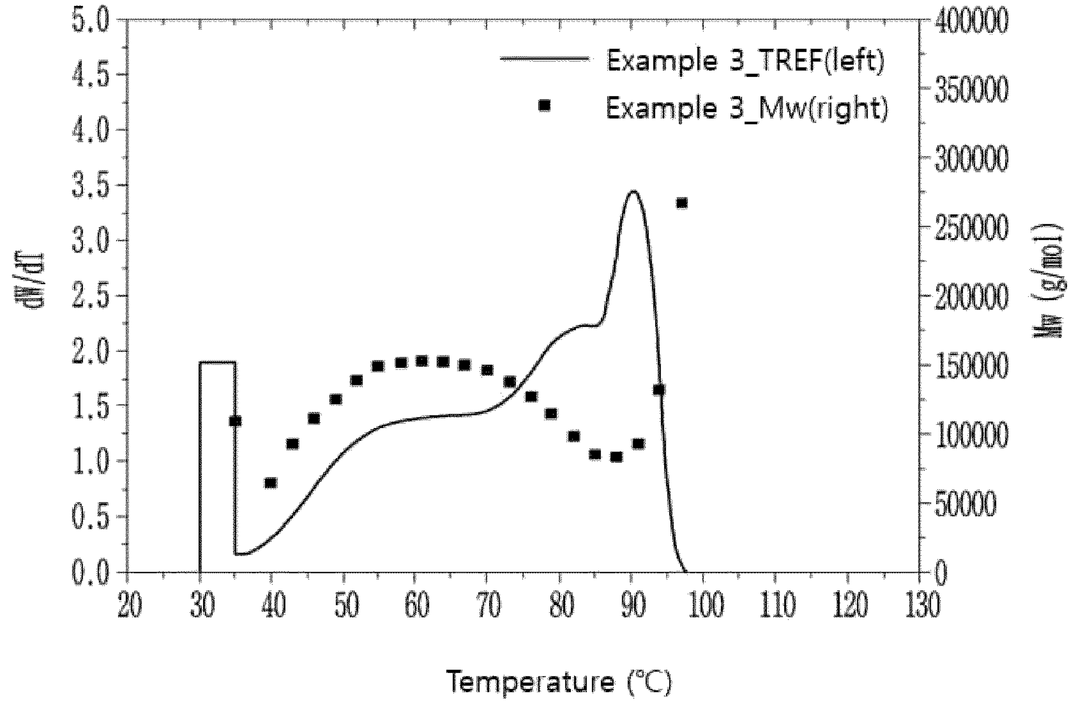
Example 3_TREF(left)
Example 3_Mw(right)
dW/dT
Mw (g/mol)
Temperature (℃)
5.0
4.5
4.0
3.5
3.0
2.5
2.0
1.5
1.0
0.5
0.0
400000
350000
300000
250000
200000
150000
100000
50000
0
20
30
40
50
60
70
80
90
100
110
120
130

【FIG. 6】

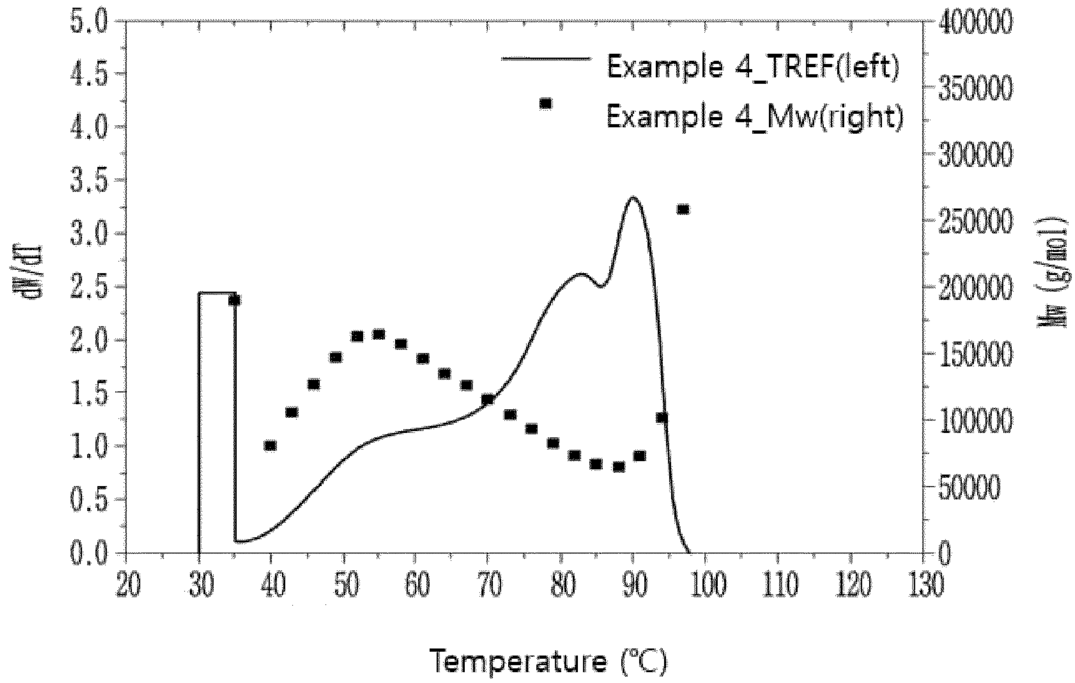
Example 4_TREF(left)
Example 4_Mw(right)
dW/dT
Mw (g/mol)
Temperature (℃)
5.0
4.5
4.0
3.5
3.0
2.5
2.0
1.5
1.0
0.5
0.0
400000
350000
300000
250000
200000
150000
100000
50000
0
20
30
40
50
60
70
80
90
100
110
120
130

**INTERNATIONAL SEARCH REPORT**

International application No. **PCT/KR2023/016343**

**A. CLASSIFICATION OF SUBJECT MATTER**

**C08F 210/16**(2006.01)i; **C08F 210/14**(2006.01)i; **C08J 5/18**(2006.01)i

According to International Patent Classification (IPC) or to both national classification and IPC

**B. FIELDS SEARCHED**

Minimum documentation searched (classification system followed by classification symbols)

C08F 210/16(2006.01); C08F 10/02(2006.01); C08F 110/02(2006.01); C08F 216/14(2006.01); C08F 297/08(2006.01); C08F 4/646(2006.01); C08F 4/6592(2006.01); D01F 6/30(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 폴리올레핀(polyolefin), 시차주사열량분석(differential scanning calorimetry, DSC), 교차 분획 크로마토그래피 분석(cross-fraction chromatography), 메탈로센(metallocene), 촉매(catalyst), 필름(film)

**C. DOCUMENTS CONSIDERED TO BE RELEVANT**

| Category* | Citation of document, with indication, where appropriate, of the relevant passages | Relevant to claim No. |
|---|---|---|
| Y | KR 10-1725004 B1 (HANWHA CHEMICAL CORPORATION) 18 April 2017 (2017-04-18) See abstract; paragraphs [0004]-[0197]; examples 1-12; and claims 1-13. | 1-13 |
| Y | KR 10-2021-0153555 A (LG CHEM, LTD.) 17 December 2021 (2021-12-17) See paragraphs [0215]-[0219]. | 1-13 |
| Y | BIANCHI, O. et al. Assessment of Avrami, Ozawa and Avrami–Ozawa equations for determination of EVA crosslinking kinetics from DSC measurements. Polymer Testing. May 2008, vol. 27, no. 6, pp. 722-729. See abstract; pages 725-727; and figure 5. | 2 |
| A | KR 10-2022-0086857 A (HANWHA SOLUTIONS CORPORATION) 24 June 2022 (2022-06-24) See entire document. | 1-13 |
| A | WO 2008-067539 A1 (DOW GLOBAL TECHNOLOGIES INC. et al.) 05 June 2008 (2008-06-05) See entire document. | 1-13 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **24 January 2024** | **25 January 2024** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2023/016343**

| Patent document cited in search report | Publication date (day/month/year) | Patent family member(s) | Publication date (day/month/year) |
|---|---|---|---|
| KR 10-1725004 B1 | 18 April 2017 | CN 109415450 A | 01 March 2019 |
| | | EP 3450467 A1 | 06 March 2019 |
| | | EP 3450467 A4 | 15 January 2020 |
| | | JP 2019-515997 A | 13 June 2019 |
| | | JP 6804559 B2 | 23 December 2020 |
| | | US 11248067 B2 | 15 February 2022 |
| | | US 2019-0263942 A1 | 29 August 2019 |
| | | WO 2017-188602 A1 | 02 November 2017 |
| KR 10-2021-0153555 A | 17 December 2021 | None | |
| KR 10-2022-0086857 A | 24 June 2022 | CN 116710496 A | 05 September 2023 |
| | | EP 4265654 A1 | 25 October 2023 |
| | | KR 10-2611686 B1 | 08 December 2023 |
| | | WO 2022-131693 A1 | 23 June 2022 |
| WO 2008-067539 A1 | 05 June 2008 | AU 2008-325009 A1 | 05 June 2008 |
| | | CA 2671256 A1 | 05 June 2008 |
| | | CN 101595252 A | 02 December 2009 |
| | | EP 2084313 A1 | 05 August 2009 |
| | | JP 2010-511801 A | 15 April 2010 |
| | | KR 10-2009-0086422 A | 12 August 2009 |
| | | TW 200902780 A | 16 January 2009 |
| | | US 2008-0299857 A1 | 04 December 2008 |
| | | US 7928022 B2 | 19 April 2011 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020220144766
- KR 1020230137793
- KR 1020160029718


### Non-patent literature cited in the description


- **LI, YU et al.** *Journal of Applied Polymer Science*, 2021, vol. 138 (2), 49652
- *J. AM. CHEM. SOC.*, 2004, vol. 126 (46), 15231-15244